# EUROPEAN PATENT SPECIFICATION

(11) **EP 4 513 233 B1**
(45) Date of publication and mention of the grant of the patent: **11.11.2026**
(21) Application number: 23791551.7
(22) Date of filing: 06.03.2023
(51) Int. Cl.: G01S 7/4865, G01S 17/89, G01S 7/48, G01B 11/02, G01B 11/24

(54) **INFORMATION PROCESSING DEVICE AND PROGRAM**
INFORMATIONSVERARBEITUNGSVORRICHTUNG UND -PROGRAMM
DISPOSITIF DE TRAITEMENT D'INFORMATIONS ET PROGRAMME

(30) Priority: 21.04.2022 JP 2022070183
(43) Date of publication of application: 26.02.2025
(73) Proprietor: Sony Semiconductor Solutions Corporation, Atsugi-shi, Kanagawa 243-0014 (JP)
(72) Inventor: ASHITANI, Tatsuji, Atsugi-shi, Kanagawa 243-0014 (JP); HANADA, Yuji, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/008280
(87) International publication number: WO 2023/203896

(56) References cited:
- JP-A- 2021 001 763
- JP-A- 2021 152 536
- US-A1- 2017 353 649
- US-A1- 2017 366 737
- US-A1- 2018 372 851
- US-A1- 2020 294 266
- US-A1- 2020 301 799
- SARODE VINIT; DHAGAT ANIMESH; SRIVATSAN RANGAPRASAD ARUN; ZEVALLOS NICOLAS; LUCEY SIMON; CHOSET HOWIE: "MaskNet: A Fully-Convolutional Network to Estimate Inlier Points", 2020 INTERNATIONAL CONFERENCE ON 3D VISION (3DV), IEEE, 25 November 2020 (2020-11-25), pages 1029 - 1038, XP033880236, DOI: 10.1109/3DV50981.2020.00113

## Description

### [Technical Field]

The present disclosure relates to an information processing device and a program.

### [Background Art]

Recently, as the usage of EC (Electronic Commerce) service has sharply increased, a severe shortage of labor in the operation of physical distribution warehouses has become evident. Therefore, there is an urgent need to automate, in the physical distribution warehouses handling various kinds of merchandise, picking work or work such as the transportation of the merchandise within the warehouses. Accordingly, the technology of an automation system that synchronizes a stereo camera system or a distance sensor with a robot arm or an AGV (Automatic Guided Vehicle) has been under consideration. According to such an automation system, an object as a target of the picking or transportation work is recognized by using a stereo camera, the distance sensor, or the like. Then, the robot arm or the AGV described above is controlled on the basis of a result of the recognition.

However, in object recognition using a sensor such as the stereo camera or the distance sensor, in a case where the target object is a transparent body such as a plastic or glass body, the transparent body transmits light, and it is therefore difficult to recognize the transparent body stably and accurately.

Accordingly, a technology for detecting the transparent body stably has been under consideration. PTL 1, for example, discloses a technology of detecting a transparent body by observing multiple polarization states (straight lines or ellipses) by an illuminating part that outputs linearly polarized light in at least three kinds or more of different polarization directions and a light receiving unit that receives at least three kinds or more of different polarization angles.
US 2017/366737 A1 discloses a device which includes a time-of-flight ranging sensor configured to transmit optical pulse signals and to receive return optical pulse signals.
US 2018/372851 A1 discloses an optoelectronic sensor which is provided for measuring the distance from an object in a monitored zone that has a light transmitter for transmitting individual light signals into the monitored zone.
JP 2021 152536 A discloses a ranging device configured to suppress deterioration in measurement accuracy caused by reflected light (noise) that is different from expected reflected light.

### [Citation List]

### [Patent Literature]

[PTL 1]
PCT Patent Publication No. WO2018/216349

### [Summary]

### [Technical Problem]

However, the technology for detecting a transparent body stably is desired to be further improved in detection accuracy.

Accordingly, the present disclosure provides a new and improved technology for making it possible to detect a subject including a transparent body stably and accurately.

### [Solution to Problem]

According to a first aspect, the present invention provides a computer program in accordance with independent claim 1. According to a second aspect, the present invention provides an information processing device in accordance with independent claim 12. Further aspects are set forth in the dependent claims, the drawings and the following description.

In order to solve the above problems, according to an aspect of the present disclosure, there is provided a program for causing a computer to function as an obtaining section configured to obtain, as a return light arrival time, a time difference between a time point at which light is emitted from a light emitting unit and a time point at which the emitted light is detected by a light receiving unit after being reflected at a subject including a transparent body, a generating section configured to generate a histogram indicating a relation between a light detection frequency in the light receiving unit and the return light arrival time on the basis of the return light arrival time, and a distance output section configured to identify multiple return light arrival times from the histogram and output multiple pieces of distance information corresponding to the identified multiple return light arrival times.

In addition, according to the present disclosure, there is provided an information processing device including an obtaining section configured to obtain, as a return light arrival time, a time difference between a time point at which light is emitted from a light emitting unit and a time point at which the emitted light is detected by a light receiving unit after being reflected at a subject including a transparent body, a generating section configured to generate a histogram indicating a relation between a light detection frequency in the light receiving unit and the return light arrival time on the basis of the return light arrival time, and a distance output section configured to identify multiple return light arrival times from the histogram and output multiple pieces of distance information corresponding to the identified multiple return light arrival times.

### [Brief Description of Drawings]

[FIG. 1]

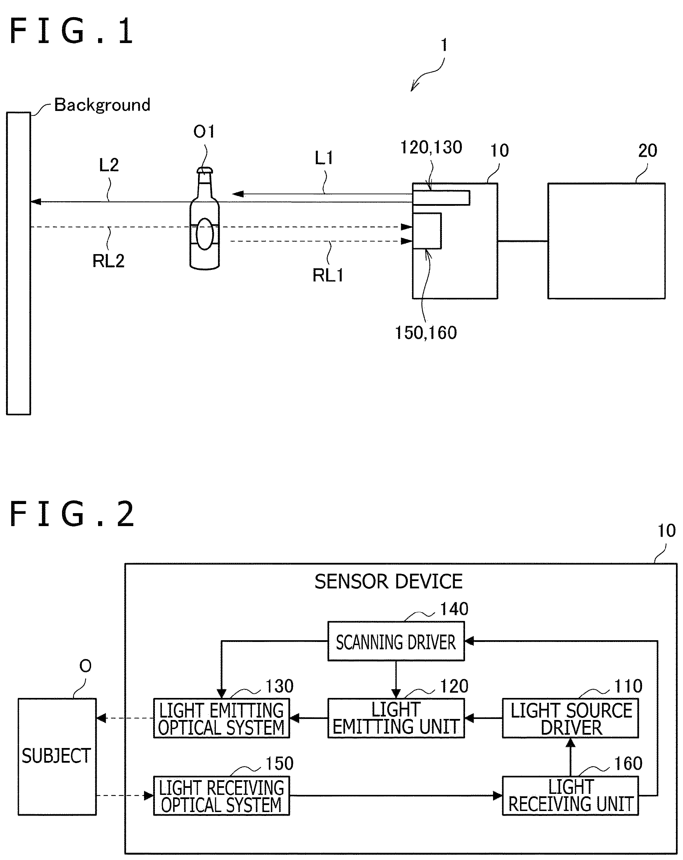

   FIG. 1 is an explanatory diagram of assistance in explaining an outline of an information processing system according to the present disclosure.
[FIG. 2]
   FIG. 2 is a block diagram illustrating an example of a functional configuration of a sensor device 10 according to a present embodiment.
[FIG. 3]

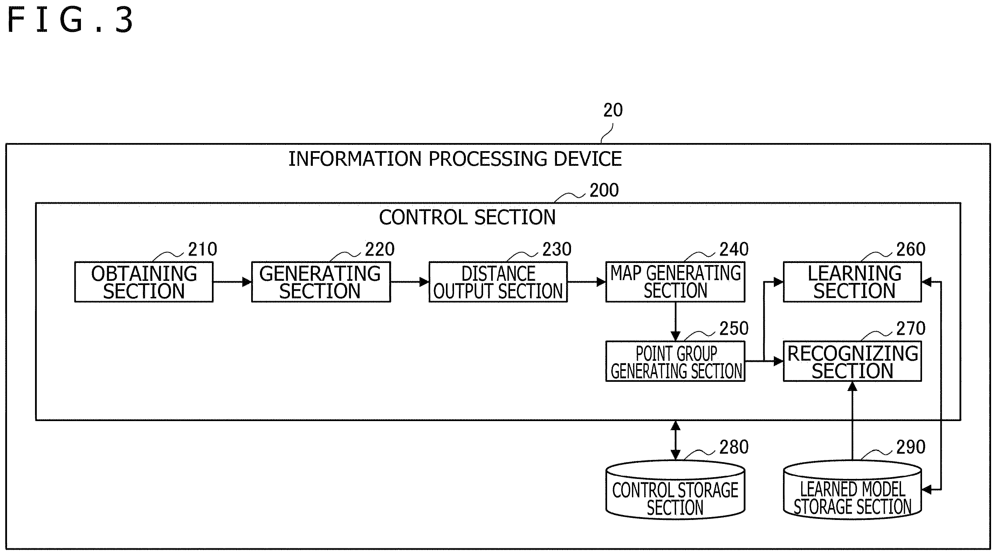

   FIG. 3 is a block diagram illustrating an example of a functional configuration of an information processing device 20 according to the present embodiment.
[FIG. 4]

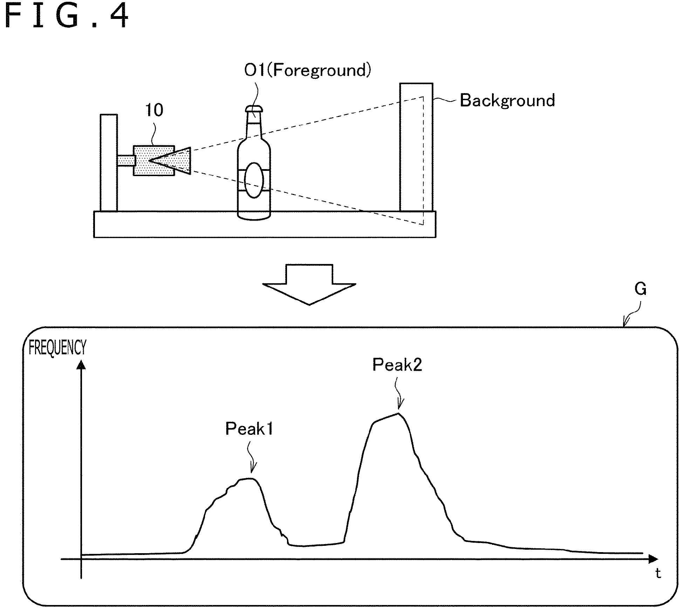

   FIG. 4 is an explanatory diagram of assistance in visually explaining a histogram generated by a generating section 220.
[FIG. 5]

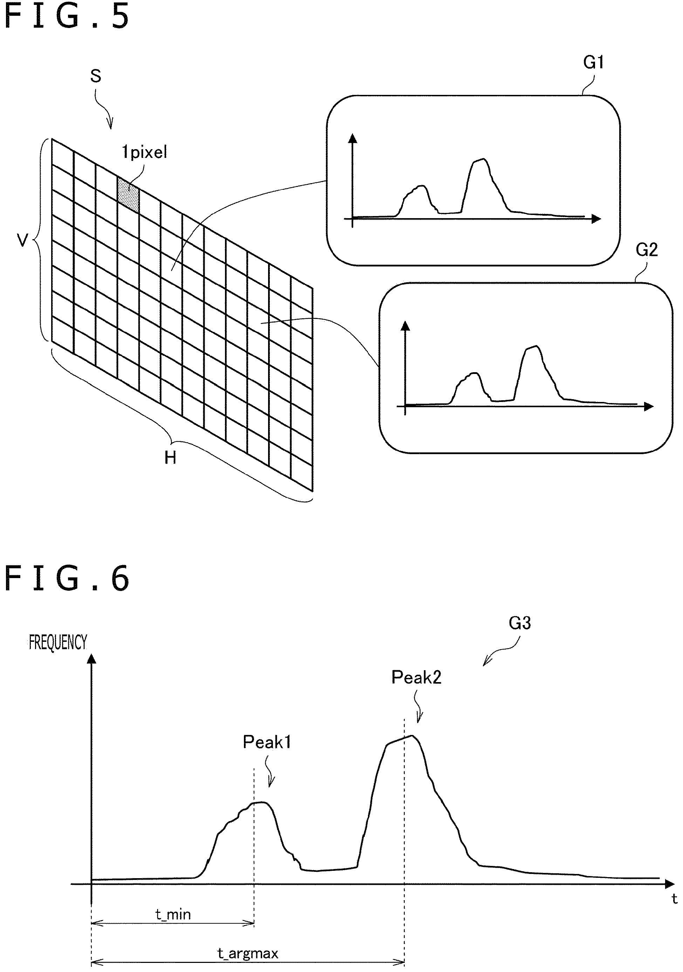

   FIG. 5 is a conceptual diagram of assistance in explaining a relation between the histogram generated by the generating section 220 and a distance measurement target range S.
[FIG. 6]
   FIG. 6 is an explanatory diagram of assistance in explaining a distance calculating method based on the histogram in a comparative example.
[FIG. 7]

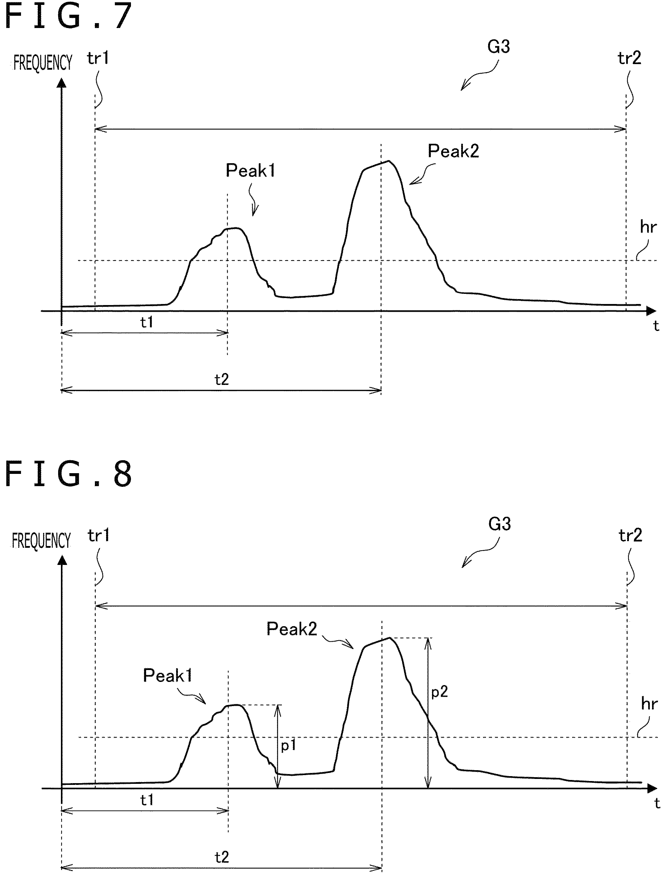

   FIG. 7 is an explanatory diagram of assistance in explaining a method of identifying return light arrival times by a distance output section 230 according to a first embodiment.
[FIG. 8]
   FIG. 8 is an explanatory diagram of assistance in explaining a method of setting a parameter by the distance output section 230 according to the first embodiment.
[FIG. 9]

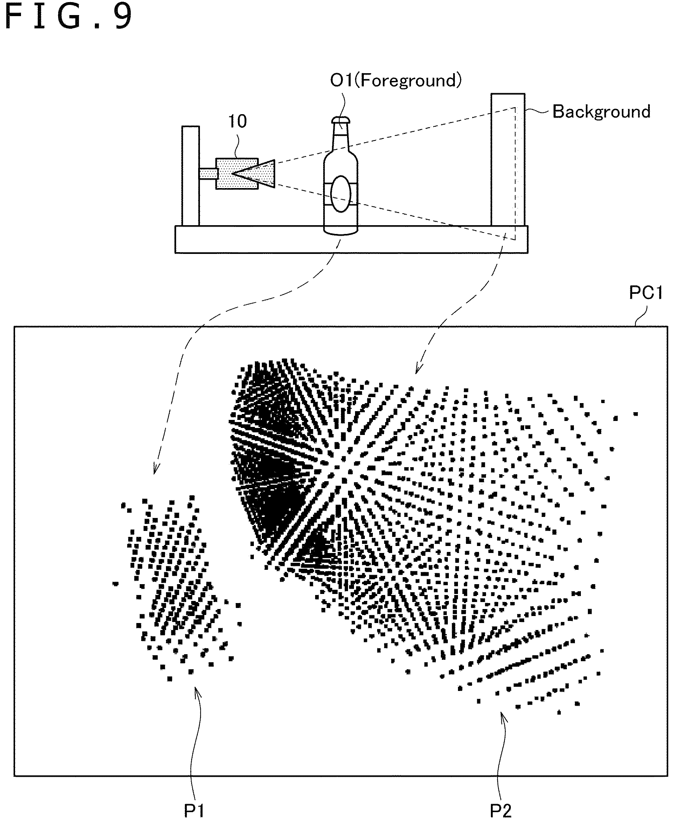

   FIG. 9 is an explanatory diagram of assistance in explaining point group data generated by a point group generating section 250.
[FIG. 10]

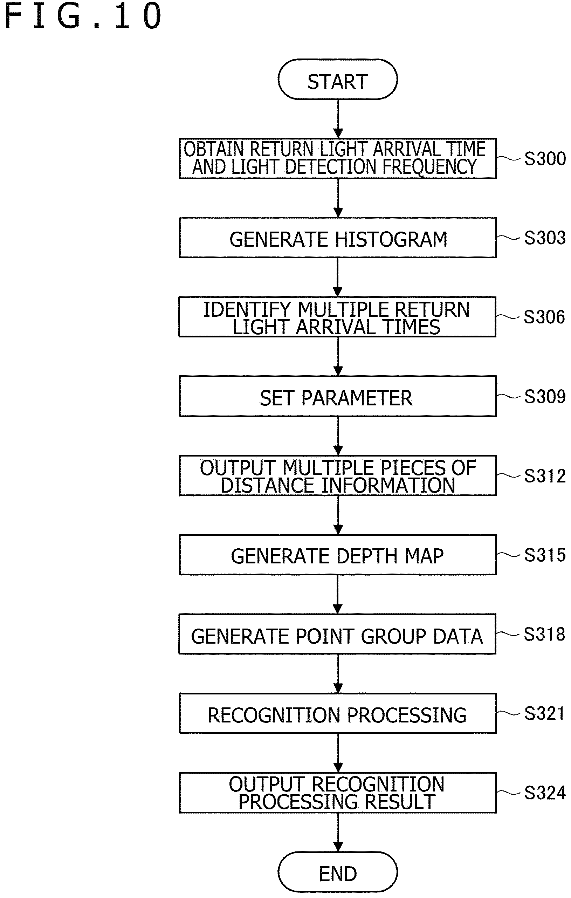

   FIG. 10 is a flowchart diagram of assistance in explaining an example of operation of an information processing system 1 according to the first embodiment.
[FIG. 11]

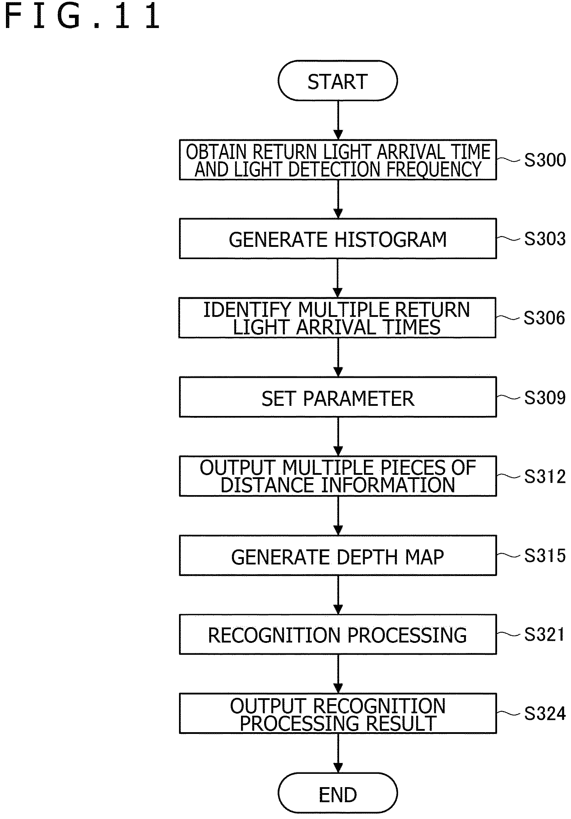

   FIG. 11 is a flowchart diagram illustrating an example of operation of the information processing system 1 according to a first modification of the first embodiment.
[FIG. 12]

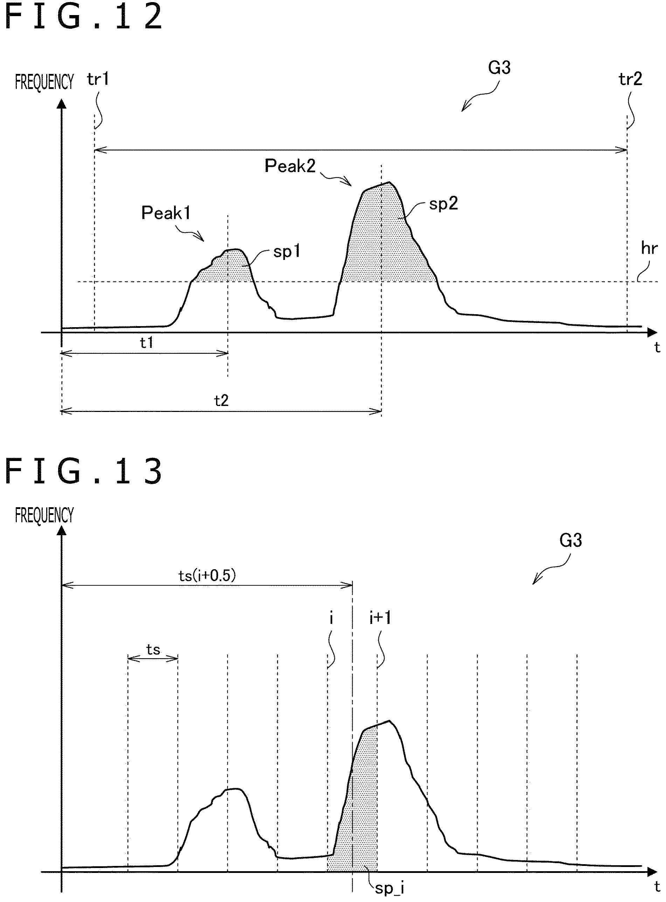

   FIG. 12 is an explanatory diagram of assistance in explaining a second modification of the first embodiment.
[FIG. 13]
   FIG. 13 is an explanatory diagram of assistance in explaining a third modification of the first embodiment.
[FIG. 14]

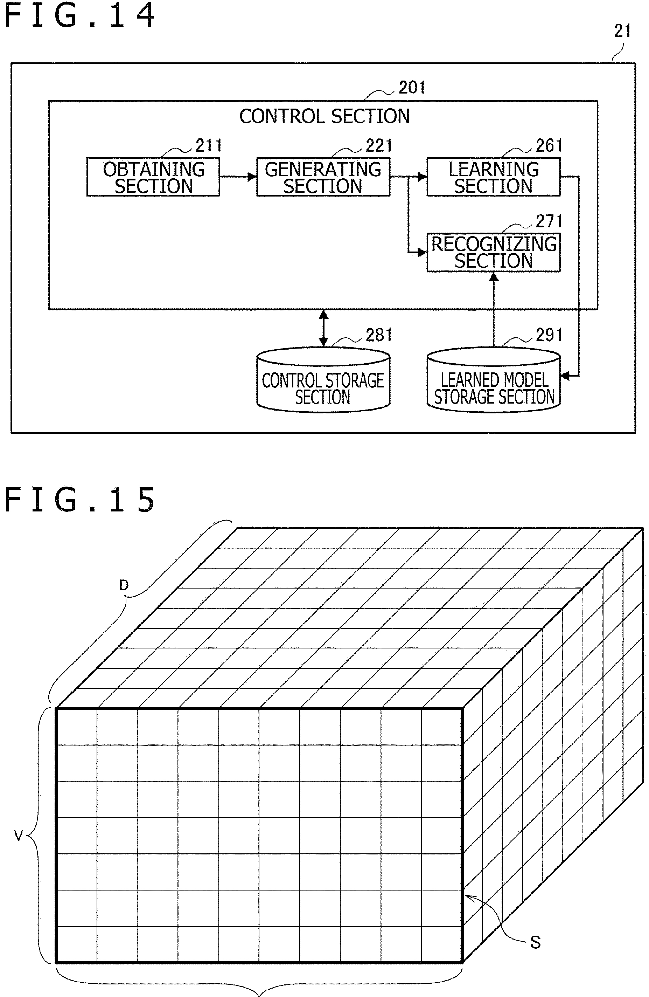

   FIG. 14 is a block diagram illustrating an example of a functional configuration of an information processing device 21 according to a second embodiment of the present disclosure.
[FIG. 15]
   FIG. 15 is a conceptual diagram of assistance in explaining a data format of a histogram input to a learning section 261 and a recognizing section 271 in the second embodiment of the present disclosure.
[FIG. 16]

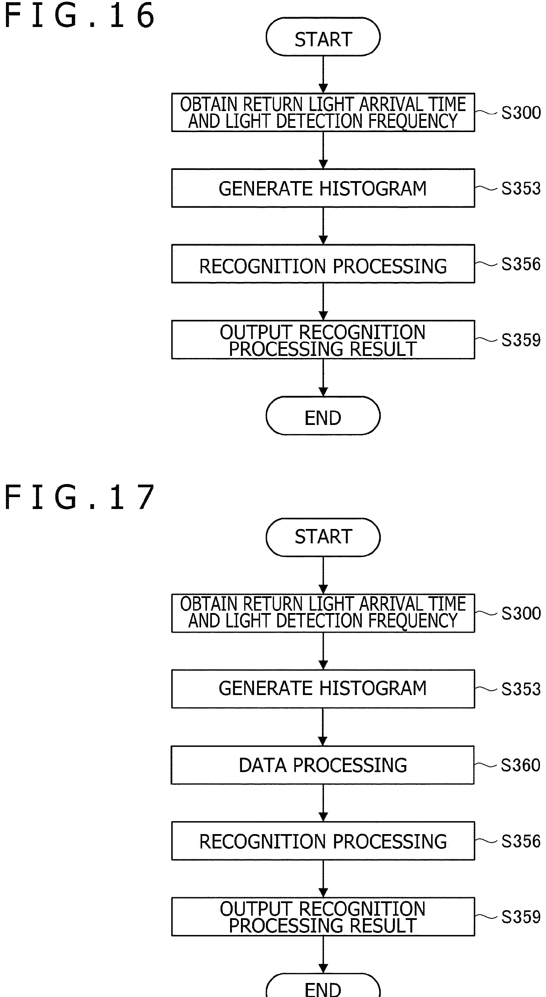

   FIG. 16 is a flowchart diagram of assistance in explaining an example of operation of an information processing system according to the second embodiment of the present disclosure.
[FIG. 17]
   FIG. 17 is a flowchart diagram of assistance in explaining an example of operation of the information processing system according to a modification of the second embodiment of the present disclosure.
[FIG. 18]

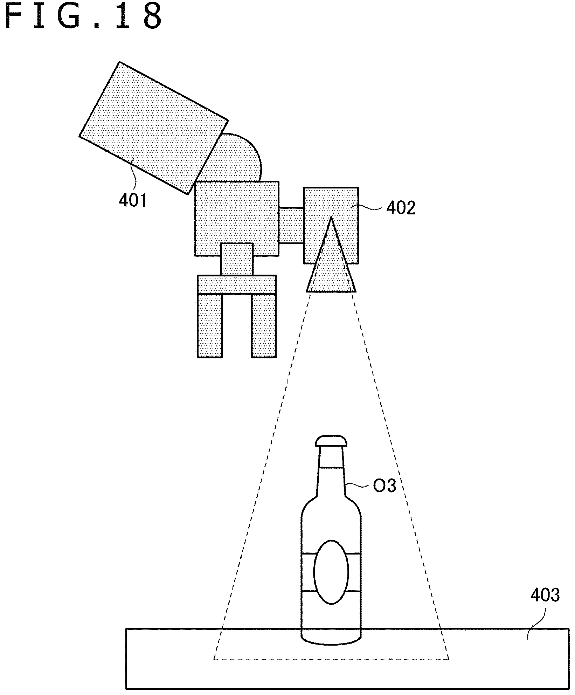

   FIG. 18 is an explanatory diagram illustrating an example of a suitable target of application of the information processing system according to the present disclosure.
[FIG. 19]

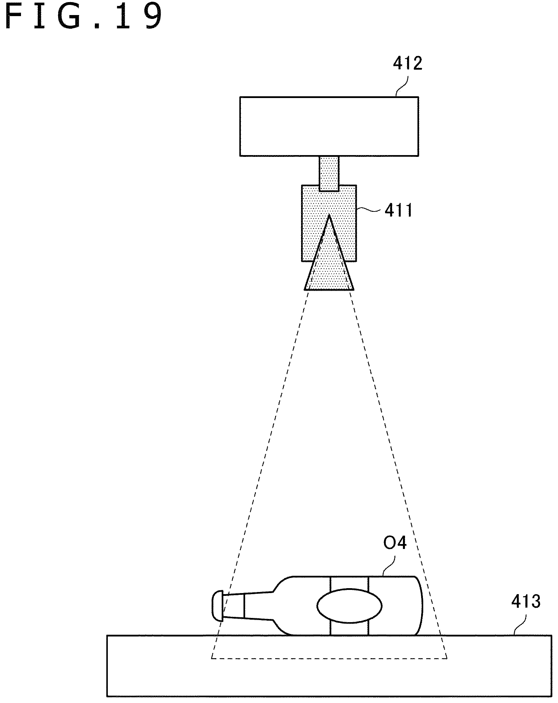

   FIG. 19 is an explanatory diagram illustrating another example of a suitable target of application of the information processing system according to the present disclosure.
[FIG. 20]

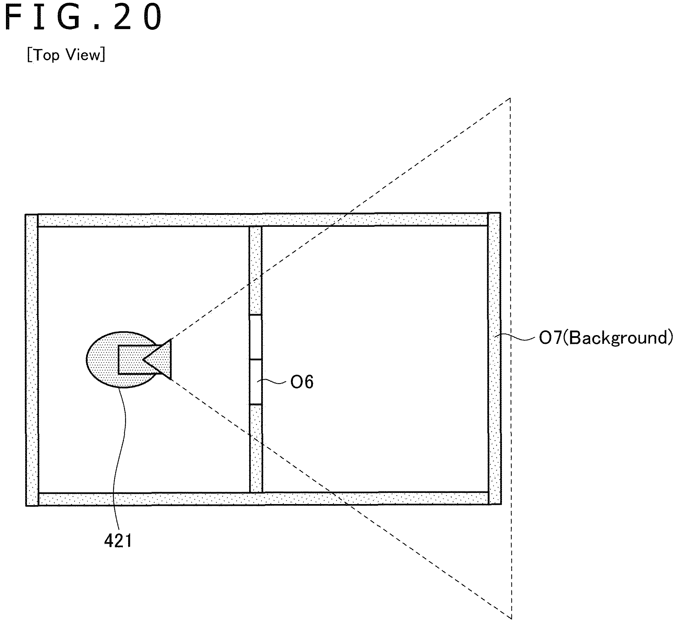

   FIG. 20 is an explanatory diagram illustrating another example of a suitable target of application of the information processing system according to the present disclosure.
[FIG. 21]

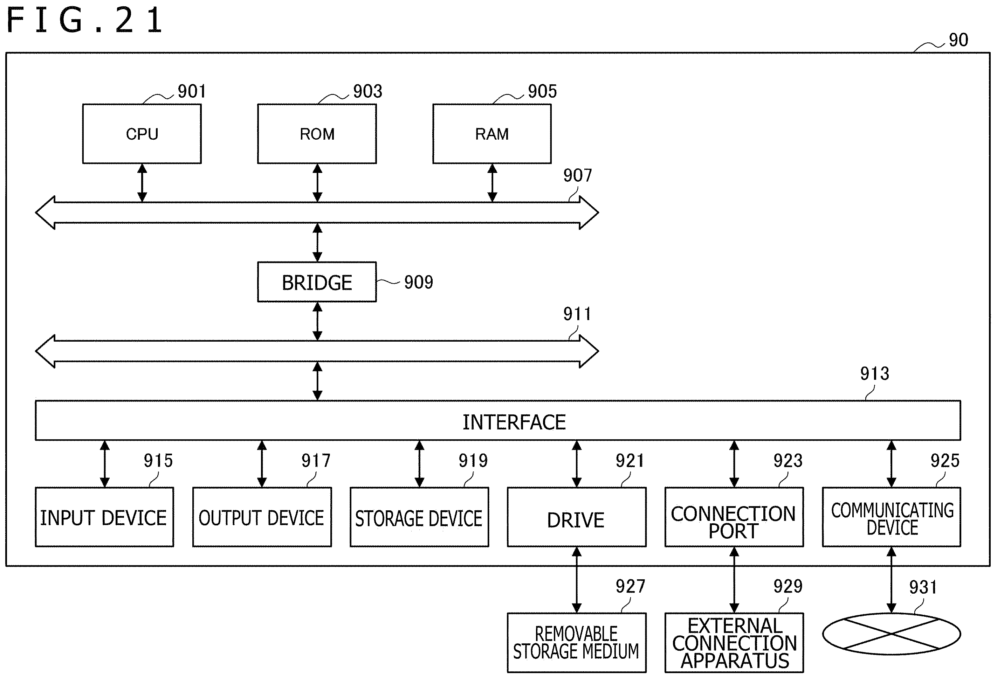

   FIG. 21 is a block diagram illustrating an example of a hardware configuration 90.

### [Description of Embodiments]

Preferred embodiments of the present invention will hereinafter be described in detail with reference to the accompanying drawings. Incidentally, in the present specification and the drawings, repeated description of constituent elements having substantially the same functional configurations will be omitted by identifying the constituent elements by the same reference signs.

In addition, in the present specification and the drawings, multiple constituent elements having substantially the same functional configurations may be distinguished from each other by providing different numerals to the rears of the same reference signs. However, in a case where each of multiple constituent elements having substantially the same functional configurations does not particularly need to be distinguished, only the same reference sign is provided to each of the multiple constituent elements.

Incidentally, description will be made according to an item order illustrated in the following.
1. Outline of Information Processing System according to Present Disclosure
2. First Embodiment
   2-1. Example of Functional Configuration
   2-2. Example of Operation
   2-3. Modifications
3. Second Embodiment according to the invention
   3-1. Example of Functional Configuration
   3-2. Example of Operation
   3-3. Modifications
4. Suitable Examples of Application of Present Disclosure
5. Example of Hardware Configuration
6. Conclusion

### <<1. Outline of Information Processing System according to Present Disclosure>>

The present disclosure relates to an information processing device that recognizes the shape of a subject including a transparent body by using a sensor such as a distance sensor. The present disclosure is applicable, for example, in a case where a target object is desired to be recognized by the sensor when the object is to be picked by using a robot arm or the like in a physical distribution warehouse, a manufacturing factory, or the like. Alternatively, the present disclosure is applicable also in a case of determining whether a product is a defective product in a manufacturing factory. Further, the present disclosure is applicable also when an AGV recognizes a surrounding environment by using the sensor.

FIG. 1 is an explanatory diagram of assistance in explaining an outline of an information processing system according to the present disclosure. As illustrated in FIG. 1, the information processing system 1 according to the present disclosure includes a sensor device 10 and an information processing device 20. In the example illustrated in FIG. 1, the sensor device 10 is wiredly connected to the information processing device 20, and is configured to be able to communicate with the information processing device 20. Incidentally, the sensor device 10 and the information processing device 20 may be configured to be able to communicate with each other by wireless communication rather than by the wired connection.

A subject O1 is an object as a target of shape recognition by the sensor device 10 and the information processing device 20. In the example illustrated in FIG. 1, the subject O1 is a glass bottle having a property of transmitting light. In addition, it is understood that the subject O1 is located between a Background (hereinafter referred to also as a background) and the sensor device 10.

The sensor device 10 is a device including a light emitting unit 120, a light emitting optical system 130, a light receiving optical system 150, and a light receiving unit 160. The sensor device 10 has a function of irradiating the subject O1 with light from the light emitting unit 120 and the light emitting optical system 130. Emitted light L1 and emitted light L2 illustrated in FIG. 1 represent light emitted from the light emitting unit 120 and the light emitting optical system 130. The emitted light L1 represents light that reaches the subject O1 after being emitted from the light emitting unit 120 and the light emitting optical system 130. Reflected light RL1 represents light obtained as a result of the emitted light L1 being reflected at the subject O1. On the other hand, the emitted light L2 represents light that passes through the subject O1, and reaches the background. Reflected light RL2 represents light obtained as a result of the emitted light L2 being reflected at the background, passing through the subject O1, and reaching the sensor device 10.

In addition, the sensor device 10 has a function of detecting the light reflected at the subject or the background in the light receiving unit 160. In the example illustrated in FIG. 1, the reflected light RL1 and the reflected light RL2 are detected in the light receiving unit 160.

The information processing device 20 has a function of recognizing the shape of the subject O1 on the basis of a time difference between a time point at which the sensor device 10 emits light and a time point at which the emitted light is detected by the sensor device 10 after being reflected at the subject O1. Further, the information processing device 20 has a function of recognizing the position of the subject O1 in addition to the shape of the subject O1.

### (Laying Out the Problems)

Here, it is known that, in object recognition using a sensor such as a stereo camera or a distance sensor, in a case where a target object is a transparent body such as a plastic or glass body, the transparent body transmits light, and it is therefore difficult to recognize the transparent body stably and accurately. As an example of such object recognition, there is a laser sensor received light amount determination system that irradiates a subject with a laser sensor, and detects the presence or absence of the object by using an amount of variation in an amount of light received in a light receiving unit. With this system, in a case where the object is a transparent body, the transparent body transmits laser light, and therefore, a sufficient difference in the amount of light received in the light receiving unit according to the presence or absence of the object is not obtained, which makes it difficult to detect the transparent body.

As another example of the object recognition as described above, there is a TOF (Time Of Flight) sensor system that detects the presence or absence, position, or the like of a subject by calculating a distance to the subject by using a distance measuring sensor of the TOF system. This system calculates a distance to the subject by using a time difference until light emitted by a light emitting unit is reflected at the subject and received by a light receiving unit. In calculating the distance to the subject, a method can be adopted which uses a histogram indicating a relation between the time difference and frequency of detection of light by the light receiving unit. This method selects one peak of the light detection frequency in the histogram, and outputs, as the distance to the subject, a distance calculated on the basis of a time difference corresponding to the time point of the peak. In this regard, in a case where the subject is a transparent body, the frequency of reception of light transmitted in the transparent body, reaching the background, and reflected at the background may be higher in the histogram than the frequency of reception of light reflected at the subject as a transparent body. Hence, the above-described method may output a distance to the background rather than the distance to the subject as a transparent body. It is therefore difficult to detect the presence or absence, position, or the like of the transparent body accurately.

In view of such circumstances, various technologies for detecting a transparent body stably have been under consideration. PTL 1, for example, discloses a method of detecting a transparent body by observing multiple polarization states (straight lines or ellipses) by an illuminating part that outputs linearly polarized light in at least three kinds or more of different polarization directions and a light receiving unit that receives at least three kinds or more of different polarization angles.

However, with the technology of PTL 1 described above, while the accuracy of detection of the transparent body is improved, there are aspects of an increase in size of the system and a rise in cost because multiple linearly polarized light illuminations are used at the same time. In this regard, there has been a desire for a technology that improves the accuracy of detection of a subject including a transparent body, and achieves a reduction in size of the system and a reduction in cost.

Accordingly, the present inventors have arrived at creating embodiments of the present disclosure from a viewpoint of the above circumstances. According to embodiments of the present disclosure, it is possible to detect a subject including a transparent body stably and accurately. In the following, such embodiments of the present disclosure will be described in detail.

### <<2. First Embodiment>>

In a first embodiment of the present disclosure, the information processing device 20 generates a histogram indicating a relation between a time difference between a time point at which the sensor device 10 emits light and a time point at which the light emitted from the sensor device 10 is detected in the light receiving unit of the sensor device 10 after being reflected at the subject and the frequency of light reception in the light receiving unit. Further, the information processing device 20 identifies multiple time differences on the basis of the generated histogram, and outputs multiple pieces of distance information corresponding to the identified multiple time differences. With this configuration, of distance information from the sensor device 10 to the subject O1 as a transparent body and distance information from the sensor device 10 to the background, for example, both pieces of distance information, that is, the distance information to the subject O1 and the distance information to the background can be output, rather than only one of the pieces of distance information.

### <2-1. Example of Functional Configuration>

### <2-1-1. Sensor Device 10>

Description will first be made of an example of a functional configuration of the sensor device 10 according to the present embodiment. FIG. 2 is a block diagram illustrating an example of a functional configuration of the sensor device 10 according to the present embodiment. As illustrated in FIG. 2, the sensor device 10 includes a light source driver 110, a light emitting unit 120, a light emitting optical system 130, a scanning driver 140, a light receiving optical system 150, and a light receiving unit 160.

### (Light Source Driver 110)

The light source driver 110 has a function of driving the light emitting unit 120 to make the light emitting unit 120 emit light. The light source driver 110 controls timing in which the light emitting unit 120 emits light, an amount of the light, and the like.

### (Light Emitting Unit 120, Light Emitting Optical System 130, and Scanning Driver 140)

The light emitting unit 120 has a function of emitting light on the basis of the control of the light source driver 110. The light emitting optical system 130 is constituted by optical parts such as optical lenses. The light emitting optical system 130 has a function of applying the light emitted by the light emission of the light emitting unit 120 to a predetermined range. The light emitted from the light emitting unit 120 is applied to the subject and the background through the light emitting optical system 130. It is to be noted that the wavelength of the light emitted by the light emitting unit 120 is not particularly limited. The light emitted by the light emitting unit 120 may be visible light or infrared light, for example. In addition, the scanning driver 140 has a function of performing control for the light emitted by the light emitting unit 120 to be applied to the subject so as to scan the surface of the subject in a horizontal or vertical direction. The scanning driver 140 may be constituted by, for example, a polygon mirror that changes a traveling direction of the light and a control unit that performs control for rotating the polygon mirror. Alternatively, the scanning driver 140 may be constituted by a MEMS (Micro Electro Mechanical Systems) mirror and a control unit for the MEMS mirror. Alternatively, the scanning driver 140 may be implemented by a light source array that can control the light emission timing in synchronism with a sensor constituting the light receiving unit.

### (Light Receiving Optical System 150 and Light Receiving Unit 160)

The light receiving optical system 150 is constituted by optical parts such as a condensing lens and a diaphragm. The light receiving optical system 150 has a function of condensing light from the subject onto the light receiving unit 160. The light receiving unit 160 is constituted by a light receiving element such as a photodiode. The light receiving unit 160 has a function of generating an electric signal when detecting light. In the present embodiment, the light receiving unit 160 is constituted by a SPAD (Single Photon Avalanche Diode). However, the light receiving unit 160 may be constituted by another light receiving element such as an APD (Avaranche Photo Diode), for example. In addition, the light receiving unit 160 may be constituted by multiple light receiving elements arranged in an array form. Such a light receiving unit 160 receives light (which will hereinafter be referred to also as emitted light) obtained when the light emitted from the light emitting unit 120 by the light emission of the light emitting unit 120 is reflected at a subject O and a subject such as the background, and the light receiving unit 160 generates an electric signal.

### <2-1-2. Information Processing Device 20>

Description will next be made of an example of a functional configuration of the information processing device 20 according to the present embodiment. FIG. 3 is a block diagram illustrating an example of a functional configuration of the information processing device 20 according to the present embodiment. As illustrated in FIG. 3, the information processing device 20 includes a control section 200, a control storage section 280, and a learned model storage section 290.

### (Control section 200)

The control section 200 has a function of controlling operation as a whole in the information processing device 20. The control section 200 includes a CPU (Central Processing Unit) and the like. The function of the control section 200 can be implemented when the CPU expands a program stored by the control storage section 280 into a RAM (Random Access Memory) and executes the program. At this time, a computer readable recording medium on which the program is recorded can also be provided. Alternatively, the control section 200 may be constituted by dedicated hardware, or may be constituted by a combination of multiple pieces of hardware. Such a control section 200 has functions as an obtaining section 210, a generating section 220, a distance output section 230, a map generating section 240, a point group generating section 250, a learning section 260, and a recognizing section 270.

The obtaining section 210 obtains, from the sensor device 10, time information indicating a time point at which light is emitted from the light emitting unit 120 and time information of a time point at which the light receiving unit 160 detects the light. On the basis of the obtained time information, the obtaining section 210 obtains, as a return light arrival time, a time difference between the time point at which the light is emitted from the light emitting unit 120 and the time point at which the emitted light is detected by the light receiving unit 160 after being reflected at the subject. Alternatively, the sensor device 10 may include a control unit not illustrated in FIG. 2, and the control unit may calculate the return light arrival time. In this case, the obtaining section 210 may simply obtain the return light arrival time calculated by the sensor device 10 from the sensor device 10.

In addition, the obtaining section 210 obtains a light detection frequency indicating a frequency at which the light receiving unit 160 detects the light from the sensor device 10 in association with the time information of the time point at which the light receiving unit 160 detects the light. The obtaining section 210 outputs the obtained return light arrival time and the obtained light detection frequency to the generating section 220. Incidentally, in the present specification, the return light arrival time will be referred to also as t, and the light detection frequency will be referred to also as a frequency.

The generating section 220 generates a histogram indicating a relation between the return light arrival time and the light detection frequency described above on the basis of the return light arrival time and the light detection frequency described above. Here, an example of the histogram generated by the generating section 220 will be described with reference to FIG. 4.

FIG. 4 is an explanatory diagram of assistance in visually explaining the histogram generated by the generating section 220. A histogram G is an example of an image visually representing the histogram generated by the generating section 220. As illustrated in FIG. 4, the generating section 220 generates the histogram G with t (return light arrival time) as an axis of abscissas and with a frequency (light detection frequency) as an axis of ordinates. Peak1 and Peak2 denote frequency peaks in the histogram G. In the example illustrated in FIG. 4, Peak1 is a peak corresponding to a foreground. More specifically, Peak1 corresponds to the light detection frequency of light emitted from the sensor device 10, reflected at the subject O1, and detected by the sensor device 10. In addition, Peak2 is a peak corresponding to the background. More specifically, Peak2 corresponds to the light detection frequency of light emitted from the sensor device 10, reaching and reflected at the background, and detected by the sensor device 10. It is to be noted that the histogram G illustrated in FIG. 4 is an example and that the shape of the histogram generated by the generating section 220, the number of frequency peaks, the positions of the peaks, and the like are not limited to this. For example, depending on an angle of a position direction of the subject O1 as viewed from the position of the sensor device 10, there can be a case where a frequency value at the frequency peak corresponding to the subject O1 is higher than a frequency value at the peak corresponding to the background.

Further, FIG. 5 is a conceptual diagram of assistance in explaining a relation between the histogram generated by the generating section 220 and a distance measurement target range S. The distance measurement target range S represents a range in which the sensor device 10 can apply light and detect the light reflected in a range of the light application. Further, in FIG. 5, each of divisions divided in a lattice manner in the distance measurement target range S corresponds to one pixel constituting the light receiving unit 160. As illustrated in FIG. 5, the generating section 220 generates the histogram G for each pixel. Letting H be the number of pixels in the horizontal direction of the distance measurement target range S, and letting V be the number of pixels in the vertical direction of the distance measurement target range S, the generating section 220 generates V × H histograms G. Alternatively, the generating section 220 may generate one histogram for each of a predetermined number of pixel groups rather than for each pixel.

Referring to FIG. 3, the description returns to the example of the functional configuration of the information processing device 20. The generating section 220 outputs the histogram generated for each pixel or each pixel group to the distance output section 230.

The distance output section 230 has a function of outputting distance information on the basis of the histogram generated by the generating section 220. More specifically, the distance output section 230 identifies multiple return light arrival times from the histogram, and outputs multiple pieces of distance information corresponding to the identified multiple return light arrival times. Further, the distance output section 230 has a function of setting a parameter to the distance information corresponding to each of the identified multiple return light arrival times according to the light detection frequency at each return light arrival time. The processing of identifying the multiple return light arrival times, setting the parameter, and outputting the multiple pieces of distance information by such a distance output section 230 will be described in more detail with reference to FIGS. 6 to 8.

FIG. 6 is an explanatory diagram of assistance in explaining a distance calculating method based on the histogram in a comparative example. Incidentally, suppose that a histogram G3 illustrated in FIG. 6 is a histogram having the same shape as the histogram G described with reference to FIG. 4 for the convenience of description. In addition, suppose that, in FIG. 6, as with Peak1 and Peak2 described with reference to FIG. 4, Peak1 and Peak2 respectively represent light detection frequency peaks corresponding to the foreground and the background.

t_min denotes a return light arrival time corresponding to Peak1 having a smallest frequency value among multiple frequency peaks in the histogram G3. In addition, t_argmax denotes a return light arrival time corresponding to Peak2 as a peak having a maximum frequency value in the histogram G3. The distance calculating method according to the comparative example selects either t_min or t_argmax on the basis of the histogram G3 as illustrated in FIG. 6. The distance calculating method of what is generally called a dTOF (Direct TOF) system is adopted which then calculates the distance to the subject by multiplying the distance information corresponding to the selected one peak by a speed of light c. With this method, in a case where distance information corresponding to only t_argmax is output, for example, distance information corresponding to t_min is not output. There is thus a possibility of not detecting the distance to the subject accurately. In a case where the subject is a transparent body, in particular, the transparent body transmits most light, and the light amount of light reflected at the transparent body is often smaller than the light amount of light reflected at the background, so that the above-described inconvenience tends to occur.

Accordingly, rather than outputting the distance information on the basis of only the return light arrival time corresponding to one peak from the histogram generated by the generating section 220, the distance output section 230 according to the present embodiment detects all peaks within a predetermined time threshold range, and identifies multiple return light arrival times corresponding to the peaks. Further, the distance output section 230 outputs multiple pieces of distance information corresponding to the identified multiple return light arrival times.

FIG. 7 is an explanatory diagram of assistance in explaining a method of identifying return light arrival times by the distance output section 230 according to the first embodiment. Incidentally, the histogram G3, Peak1, and Peak2 in FIG. 7 are the same as in the contents described with reference to FIG. 4 and FIG. 6, and therefore, detailed description thereof will be omitted here.

A time threshold value tr1 and a time threshold value tr2 are an example of time threshold values indicating threshold values of return light arrival times. In addition, a frequency threshold value hr is an example of a frequency threshold value indicating a threshold value of light detection frequency. The time threshold values and the frequency threshold value are set by an operator of the information processing device 20 according to a range in which subjects are desired to be detected (range of distance from the sensor device 10). In addition, t1 is a return light arrival time corresponding to Peak1. t2 is a return light arrival time corresponding to Peak2.

First, the distance output section 230 detects all of light detection frequency peaks within a range of the time threshold value tr1 and the time threshold value tr2 from the histogram G3. In the example illustrated in FIG. 7, the distance output section 230 detects Peak1 and Peak2 as light detection frequency peaks within the range of the time threshold value tr1 and the time threshold value tr2.

Next, the distance output section 230 identifies multiple return light arrival times corresponding to peaks exceeding the frequency threshold value hr among the detected peaks described above. In the example illustrated in FIG. 7, both of frequency values at the detected Peak1 and the detected Peak2 exceed the frequency threshold value hr, and therefore, the distance output section 230 identifies t1 and t2, which are multiple return light arrival times respectively corresponding to Peak1 and Peak2. The distance output section 230 outputs two pieces of distance information respectively corresponding to the identified t1 and the identified t2. Letting z be distance information, and letting c be a speed of light, the distance output section 230 outputs the two pieces of distance information, that is, z = ct1 and ct2.

Next, referring to FIG. 8, description will be made of processing of setting a parameter by the distance output section 230. FIG. 8 is an explanatory diagram of assistance in explaining a method of setting a parameter by the distance output section 230 according to the first embodiment. The histogram G3, Peak1, Peak2, tr1, tr2, hr, t1, and t2 in FIG. 8 are as described above with reference to FIG. 7, and therefore, detailed description thereof will be omitted here.

p1 is the value of a light detection frequency at the identified t1. In addition, p2 is the value of a light detection frequency at the identified t2. The distance output section 230 sets p1 as the parameter of the distance information ct1 corresponding to t1. In addition, the distance output section 230 sets p2 as the parameter of the distance information ct2 corresponding to t2. Hence, letting conf be the value of the set parameter, the distance output section 230 outputs two items, that is, (z, conf) = (ct1, p1) and (ct2, p2) as the distance information to which the parameter is set. This configuration increases information to be considered in the processing of shape recognition by the recognizing section 270 to be described later. An improvement in accuracy of the recognition can therefore be expected.

Referring to FIG. 3, the description returns to the example of the functional configuration of the information processing device 20. The map generating section 240 has a function of generating a depth map, which is image data indicating a distance to a subject for each pixel or for each predetermined pixel group, on the basis of the multiple pieces of distance information output from the distance output section 230. In a case where there are multiple pieces of distance information corresponding to each pixel or each predetermined pixel group, the map generating section 240 generates multiple depth maps according to the number of the pieces of distance information that are present. The map generating section 240 outputs the generated depth map to the point group generating section 250. At this time, the map generating section 240 may output, together with the above-described depth map, the information of the parameter set to the distance information corresponding to each pixel of the above-described depth map.

The point group generating section 250 has a function of generating point group data on the basis of the above-described depth map generated by the map generating section 240. More specifically, on the basis of the above-described depth map, the point group generating section 250 converts the position of the subject indicated by each of the multiple pieces of distance information corresponding to one pixel or a predetermined pixel group into coordinates in a three-dimensional space. Further, the point group generating section 250 generates the point group data while associating, with each of the above-described coordinates, the parameter set to the distance information corresponding to the coordinate.

FIG. 9 is an explanatory diagram of assistance in explaining the point group data generated by the point group generating section 250. Incidentally, suppose that the sensor device 10, the subject O1, and the Background in FIG. 9 are in the same positional relation as the sensor device 10, the subject O1, and the Background described with reference to FIG. 4.

Point group data PC1 represents a diagram illustrating a state in which the point group data generated by the point group generating section 250 is viewed from obliquely above. In the point group data PC1, a point group P1 is a point group indicating the coordinates of the position indicated by each piece of distance information corresponding to the subject O1 as the foreground. In addition, a point group P2 is a point group indicating the coordinates of the position indicated by each piece of distance information corresponding to the background. As illustrated in FIG. 9, in a case where the subject O1 is a transparent body, a part of the light emitted from the sensor device 10 is reflected at the subject O1, and is detected by the sensor device 10. However, the remaining part of the light emitted from the sensor device 10 passes through the subject O1 and reaches the background, is reflected at the background, and is detected by the sensor device 10. Hence, in a case where the subject is a transparent body, point group data corresponding to each of the subject as the foreground and the subject as the background is generated as in the case of the point group data PC1.

The point group generating section 250 outputs the generated point group data to the learning section 260 and the recognizing section 270.

Referring to FIG. 3, the description returns to the example of the functional configuration of the information processing device 20. The learning section 260 has a function of learning a relation between the above-described point group data and the shape of the subject by using a neural network that uses, as input data, the point group data generated by the point group generating section 250 and correct answer data representing the shape of the subject associated with the point group data. The learning section 260 stores a model obtained as a result of the learning in the learned model storage section 290.

The recognizing section 270 has a function of recognizing the shape of the subject by using the model obtained as a result of the learning of the learning section 260. At this time, the recognizing section 270 performs the processing of shape recognition using the point group data output from the point group generating section 250 as input data. Further, the recognizing section 270 may output a recognition result indicating the position of the subject in addition to a recognition result indicating the shape of the subject. For example, the recognizing section 270 outputs the shape and position of the subject O1.

### (Control Storage Section 280)

The control storage section 280 is a storage device capable of storing a program and data for operating the control section 200. In addition, the control storage section 280 can also temporarily store various kinds of data necessitated in a process of the operation of the control section 200. The storage device may be, for example, a nonvolatile storage device.

### (Learned Model Storage Section 290)

The learned model storage section 290 is a storage device that stores the point group data used for the learning of the learning section 260 and the correct answer data indicating the shape of the subject associated with the point group data. In addition, the learned model storage section 290 stores the model obtained as a result of the learning of the learning section 260.

### <2-2. Example of Operation>

An example of a functional configuration of the information processing device 20 according to the present embodiment has been described above with reference to FIGS. 3 to 9. Next, referring to FIG. 10, description will be made of an example of operation of the information processing system 1 according to the present embodiment.

FIG. 10 is a flowchart diagram of assistance in explaining an example of operation of the information processing system 1 according to the first embodiment. Incidentally, the operation example illustrated in FIG. 10 is an example of operation in an inference stage by the information processing device 20. Suppose that as preprocessing of the operation example illustrated in FIG. 10, the learning section 260 of the information processing device 20 has learned the relation between the point group data and the shape of the subject in advance, and the model obtained as a result of the learning is stored in the learned model storage section 290.

First, the obtaining section 210 of the information processing device 20 obtains a return light arrival time and a light detection frequency from the sensor device 10 (S300). Next, the generating section 220 generates a histogram on the basis of the return light arrival time and the light detection frequency described above (S303).

The distance output section 230 identifies multiple return light arrival times on the basis of the above-described histogram (S306). The distance output section 230 outputs multiple pieces of corresponding distance information on the basis of the identified multiple return light arrival times. In addition, the distance output section 230 sets a parameter to each of the multiple pieces of distance information corresponding to the identified multiple return light arrival times (S309).

The distance output section 230 outputs the above-described multiple pieces of distance information in association with the above-described parameter (S312).

The map generating section 240 generates a depth map on the basis of the output multiple pieces of distance information described above (S315). The point group generating section 250 generates point group data on the basis of the above-described depth map and the above-described parameter (S318).

The recognizing section 270 uses the above-described point group data as input data, and performs the processing of recognizing the shape of the subject (S321). The recognizing section 270 outputs a result of the recognition processing (S324).

An example of operation of the information processing system 1 according to the first embodiment has been described above with reference to FIG. 10. Incidentally, though an output destination of the result of the recognition processing by the recognizing section 270 is not particularly limited in the above-described operation example, the output destination of the result of the recognition processing can be selected according to a target of application of the present information processing system. An example of suitable targets of application of the present information processing system and an example of the output destination of the result of the recognition processing for each application target will be described later in detail.

### (Supplement)

An example of a functional configuration and an example of operation of the first embodiment according to the information processing system of the present disclosure have been described above. According to the present embodiment described above, the generating section 220 of the information processing device 20 generates a histogram indicating a relation between the return light arrival time and the light detection frequency obtained from the sensor device 10. Further, the distance output section 230 identifies multiple return light arrival times from the generated histogram, and outputs multiple pieces of distance information corresponding to the identified multiple return light arrival times. With this configuration, even when the subject is a transparent body, the distance information based on the return light arrival time corresponding to the light reflected at the subject is output together with the distance information based on the return light arrival time corresponding to the light passing through the subject and reflected at the background. Hence, it is possible to detect the subject including a transparent body stably and accurately.

In addition, according to the present embodiment described above, the distance output section 230 sets a light detection frequency at each of the identified multiple return light arrival times as a parameter of each of the multiple pieces of distance information corresponding to the multiple return light arrival times. The point group generating section 250 generates point group data while associating, with coordinates indicated by each point in the processing of generating the point group data, the above-described parameter set to the distance information corresponding to the coordinates. With this configuration, in learning the relation between the point group data and the shape of the subject, the learning section 260 can learn a relation between the coordinates indicated by each point of the point group data, the parameter (light detection frequency) associated with each point of the point group data, and the shape of the subject. The recognizing section 270 recognizes the shape of the subject on the basis of the parameter (light detection frequency) associated with each point of the point group data in addition to the information of the coordinates indicated by each point of the point group data. Hence, as compared with a case where the above-described parameter is not set to the above-described distance information, information to be considered in the processing of recognizing the shape of the subject by the recognizing section 270 is increased. An improvement in the accuracy of recognizing the shape of the subject by the recognizing section 270 can therefore be expected.

In addition, in the present embodiment described above, a SPAD is adopted as a light receiving element constituting the light receiving unit 160 of the sensor device 10. A sensor using the SPAD has a high sensitivity and a high frequency of detecting light as compared with a conventional image sensor. Hence, even faint reflected light from the transparent body that transmits most of the emitted light can be detected. Consequently, even in a case where the subject is a transparent body, an improvement in the accuracy of recognizing the shape or position of the subject can be expected.

In addition, in the present embodiment described above, an information processing system capable of detecting a transparent body stably and accurately is implemented by one sensor device 10 and one information processing device 20. Because of this configuration, a device miniaturization can be expected as compared with a system that uses multiple sensor devices such as cameras or a system that uses a large-diameter Fresnel lens or the like. Hence, an inspecting device or a control device including the sensor device 10 and the information processing device 20 according to the present disclosure, for example, can be miniaturized, and a degree of freedom of disposition of the inspecting device or the control device becomes higher. For example, a distal end of a robot arm can be mounted with the sensor device 10 and the information processing device 20.

In addition, the present embodiment described above adopts a SPAD in the configuration of the light receiving unit 160, and the information processing device 20 outputs distance information by the dTOF system on the basis of the return light arrival time detected by the SPAD. As compared with the conventional image sensor, the sensor using the SPAD has a high saturation signal level and a wide range of intensity of light that can be detected. In addition, because the output of the distance information is performed by the dTOF system, even when the SPAD constituting the light receiving unit is saturated, a certain number of photoelectrons and a delay time thereof can be measured. Hence, even in a case where the emitted light is directly reflected at the subject and is received by the sensor device 10, the sensor device 10 and the information processing device 20 can output the distance information to the subject. In this regard, with the conventional image sensor or a distance measuring device that outputs distance information by an iTOF (Indirect Time of Flight) system, in a case where the subject is an object having a curved surface and a luster on a surface thereof, such as a glass bottle, the light detected by the light receiving unit has a high luminance, and a phenomenon can occur in which there are points that cannot be observed in the sensor or the distance measuring device, depending on a positional relation between the subject and a light source. However, the above-described configuration in the present embodiment can significantly reduce phenomena as described above. Hence, it is possible to reduce a system cost or an integration cost of installing multiple cameras or devising a disposition of the light source in order to avoid the phenomena as described above.

In addition, according to the present embodiment described above, the distance output section 230 outputs multiple pieces of distance information. At this time, in a case where the subject as the foreground is a transparent body, both the distance information corresponding to the light reflected at the subject as the foreground and the distance information corresponding to the light passing through the subject and reflected at the background are output. Hence, in a case where the foreground is transparent, the information processing device 20 can obtain the distance information of both the foreground and the background. Hence, in a case where the distance information output by the information processing device 20 is used for the self-position estimation of an autonomous mobile body such as an AGV or an AMR (autonomous mobile robot), for example, the AGV or the AMR can be made to recognize the positional information of both of a transparent automatic door made of glass and a wall surface or the like beyond the transparent automatic door. Hence, an improvement in accuracy of the self-position estimation of the autonomous mobile body can be expected.

In addition, according to the present embodiment described above, the distance information of both the foreground and the background can be output, as described above. The use of this output result enables an application such that it is determined that the subject (foreground) is a transparent body in a case where the distance information of both the foreground and the background is output and such that it is determined that there is no subject in a case where only the distance information of the background is output.

### <2-3. Modifications>

### (First Modification)

Incidentally, in the operation example described above, the recognizing section 270 performs the processing of recognizing the shape of the subject by using the point group data as input data. However, the recognizing section 270 may perform the processing of recognizing the shape of the subject by using the depth map generated by the map generating section 240 as the input data. FIG. 11 is a flowchart diagram illustrating an example of operation of the information processing system 1 according to a first modification of the first embodiment. As illustrated in FIG. 11, in the first modification, the processing proceeds to S321 after the map generating section 240 generates a depth map in S315. In this case, in a learning stage, the learning section 260 may learn a relation between the depth map and the shape of the subject by using a neural network that uses, as input data, the depth map and correct answer data representing the shape of the subject associated with the depth map. Further, the recognizing section 270 can perform recognition processing with the depth map generated by the map generating section 240 as input data by using a model obtained as a result of the learning of the learning section 260.

### (Second Modification)

In addition, as another modification of the first embodiment, the distance output section 230 may perform the setting of the parameter to the multiple pieces of distance information corresponding to the identified multiple return light arrival times as follows. FIG. 12 is an explanatory diagram of assistance in explaining a second modification of the first embodiment. Incidentally, the histogram G3, the time threshold value tr1, the time threshold value tr2, the frequency threshold value hr, t1, and t2 in FIG. 12 are as described above with reference to FIG. 8, and therefore, detailed description thereof will be omitted here.

First, suppose that the distance output section 230 has identified t1 and t2. Next, the distance output section 230 detects a time range in which the frequency is equal to or higher than the frequency threshold value hr in continuous preceding and succeeding time ranges with each of t1 and t2 as a reference point. Further, the distance output section 230 calculates an integrated value of a frequency part exceeding the frequency threshold value hr in the detected time range. Alternatively, the distance output section 230 may calculate an integrated value of a part exceeding a predetermined threshold value different from the frequency threshold value hr. In the example illustrated in FIG. 12, parts filled by hatching correspond to the frequency part exceeding the frequency threshold value hr in the detected time range. The distance output section 230 calculates integrated values sp1 and sp2 of the corresponding parts. The distance output section 230 sets the calculated integrated values sp1 and sp2 as the parameter of the distance information corresponding to the identified t1 and the identified t2. Hence, letting z be the distance information, and letting conf be the parameter, the distance output section 230 outputs two items, that is, z = (ct1, sp1) and (ct2, sp2) as the multiple pieces of distance information and the parameter associated with the distance information.

The above-described integrated value changes according to the steepness of a peak appearing in the above-described time range. Specifically, the steeper the peak appearing in the above-described time range, the larger the above-described integrated value. In the example illustrated in FIG. 7, the peak (Peak2) appearing in a predetermined time range having t2 as a reference point is steeper than the peak (Peak1) appearing in a predetermined time range having t1 as a reference point. Therefore, the integrated value sp2 calculated for the time range having t2 as a reference point is a value larger than the integrated value sp1 calculated for the time range having t1 as a reference point. That is, when the distance output section 230 sets the above-described integrated values as the parameter, the learning section 260 can learn a relation between the distance information corresponding to the identified return light arrival times, the steepness of the peaks in the time ranges preceding and succeeding the identified return light arrival times, and the correct answer data. Hence, a further improvement in the recognition accuracy of shape recognition by the recognizing section 270 can be expected.

Further, the distance output section 230 can also set multiple parameters to each piece of the distance information corresponding to the identified return light arrival times. For example, the distance output section 230 may set the above-described integrated values and respective frequency values at t1 and t2 as parameters to the respective pieces of distance information corresponding to the identified t1 and the identified t2.

### (Third Modification)

Further, as another modification of the first embodiment, the distance output section 230 can also perform the processing of identifying the multiple return light arrival times and the processing of setting the parameter as follows. FIG. 13 is an explanatory diagram of assistance in explaining a third modification of the first embodiment. Incidentally, the histogram G3 in FIG. 13 is as described above with reference to FIG. 6, and therefore, detailed description thereof will be omitted here.

First, the distance output section 230 divides the return light arrival times by predetermined unit times in the histogram generated by the generating section 220. In the example illustrated in FIG. 13, the distance output section 230 divides the return light arrival times by predetermined unit times ts in the histogram G3. Next, for each division, the distance output section 230 identifies a time within each division as one return light arrival time of multiple return light arrival times. For example, the distance output section 230 may identify a time of a middle point in each division as one of the multiple return light arrival times. Alternatively, the distance output section 230 may identify a time of a start point or an end point in each division as one of the multiple return light arrival times. In the example illustrated in FIG. 13, the distance output section 230 identifies, as one of the multiple return light arrival times, ts (i + 0.5) as a return light arrival time at a middle point in an ith (i is an integer of 0 or more) division counted from the left side of the histogram when the return light arrival times are divided by the unit times ts. Similarly, also for all of the divisions other than the ith division, the distance output section 230 identifies a return light arrival time at a middle point in each division. Then, letting z_i be the distance information corresponding to the return light arrival time identified in the ith division, and letting imax be a maximum value of i, the distance output section 230 outputs pieces of distance information corresponding in number to imax + 1, that is, z = z_0, z_1, ..., z_imax.

Next, the distance output section 230 performs the processing of setting the parameter as follows. First, the distance output section 230 calculates an integrated value of a frequency in the range of each division. In the example illustrated in FIG. 13, letting sp_i be the integrated value of a frequency in the range of the ith division, an integrated value of a part filled by hatching corresponds to the integrated value sp_i of a frequency in the range of the ith division. The distance output section 230 sets the calculated integrated value of a frequency in the range of each division as the parameter of each of the multiple pieces of distance information corresponding to the return light arrival times identified in the respective divisions. Here, letting conf be the parameter, the distance output section 230 outputs multiple pieces of distance information corresponding in number to imax + 1, that is, (z, conf) = (z_0, sp_0), (z_1, sp_1), ..., (z_imax, sp_imax) in association with the set parameter.

According to such a third modification, the distance output section 230 outputs multiple pieces of distance information larger in number as compared with the first embodiment, the first modification, and the second modification from the histogram generated by the generating section 220. This configuration further increases an amount of information to be used as input data in the processing of recognition by the recognizing section 270. An improvement in accuracy of the processing of recognition by the recognizing section 270 can therefore be expected. Further, when the predetermined unit times are set to be the same time ranges as the temporal resolution of the light emitting unit 120 and the light receiving unit 160 of the sensor device 10, the distance output section 230 can output multiple pieces of distance information based on all of the return light arrival times and the information of light detection frequency represented in the histogram. Hence, as compared with the first embodiment, the first modification, and the second modification described above, in the present modification, the distance information and the integrated values of light detection frequency corresponding to the return light arrival times at more time points are considered in the processing of shape recognition by the recognizing section 270. Hence, a further improvement in the accuracy of shape recognition by the recognizing section 270 can be expected.

Incidentally, with this configuration, the data amount of the multiple pieces of distance information output by the distance output section 230 is increased. In regard to this, the above-described data amount can be adjusted by adjusting the ranges of the predetermined unit times that determine the number of divisions described above. In addition, the above-described data amount can be adjusted by not outputting the distance information corresponding to divisions in which the calculated integrated value sp_i is equal to or less than a predetermined threshold value.

### <<3. Second Embodiment according to the invention>>

A second embodiment of the present disclosure will next be described. In the present embodiment, a recognizing section 271 of an information processing device 21 performs the processing of recognizing the shape of a subject by using, as input data, a histogram generated on the basis of a return light arrival time and a light detection frequency obtained from a sensor device 10.

### <3-1. Example of Functional Configuration>

The sensor device 10 according to the second embodiment of the present disclosure can be implemented by a functional configuration similar to that of the sensor device 10 according to the first embodiment. As in the first embodiment described above, the sensor device 10 outputs, to the information processing device 20, a return light arrival time indicating a time from a time point at which the light emitting unit 120 emits light to the reception of the emitted light by the light receiving unit 160 after the emitted light is reflected at the subject and a light detection frequency in the light receiving unit 160.

Next, an example of a functional configuration of the information processing device 21 will be described with reference to FIG. 14. FIG. 14 is a block diagram illustrating an example of a functional configuration of the information processing device 21 according to the second embodiment of the present disclosure. As illustrated in FIG. 14, the information processing device 21 includes a control section 201, a control storage section 281, and a learned model storage section 291.

### (Control Section 201)

The control section 201 has a function of controlling operation as a whole in the information processing device 21. The control section 201 includes a CPU and the like. The function of the control section 201 can be implemented when the CPU expands a program stored by the control storage section 281 into a RAM and executes the program. At this time, a computer readable recording medium on which the program is recorded can also be provided. Such a control section 201 has functions as an obtaining section 211, a generating section 221, a learning section 261, and a recognizing section 271.

As with the obtaining section 210 of the information processing device 20, the obtaining section 211 obtains, from the sensor device 10, time information indicating a time point at which light is emitted from the light emitting unit 120 and time information of a time point at which the light receiving unit 160 detects the light. On the basis of the obtained time information, the obtaining section 211 obtains, as a return light arrival time, a time difference between the time point at which the light is emitted from the light emitting unit 120 and the time point at which the emitted light is detected by the light receiving unit 160 after being reflected at the subject. Alternatively, the sensor device 10 may include a control unit not illustrated in FIG. 2, and the control unit may calculate the return light arrival time. In this case, the obtaining section 211 may simply obtain the return light arrival time calculated by the sensor device 10 from the sensor device 10.

The generating section 221 generates a histogram indicating a relation between the return light arrival time and the light detection frequency described above on the basis of the return light arrival time and the light detection frequency described above. The generating section 221 outputs the generated histogram to the learning section 261 and the recognizing section 271.

Here, FIG. 15 is a conceptual diagram of assistance in explaining a data format of the histogram input to the learning section 261 and the recognizing section 271 in the second embodiment of the present disclosure. The distance measurement target range S illustrated in FIG. 15 is as described with reference to FIG. 5, and therefore, detailed description thereof will be omitted here.

As with the generating section 220 according to the first embodiment, the generating section 221 according to the present embodiment generates one histogram for each pixel. That is, letting H be the number of pixels in the horizontal direction of the distance measurement target range S, and letting V be the number of pixels in the vertical direction of the distance measurement target range S, the generating section 221 generates V × H histograms. Alternatively, the generating section 221 may generate one histogram for each of a predetermined number of pixel groups rather than for each pixel.

Here, letting D be the number of sections (referred to also as bins) of the histogram generated by the generating section 221, return light arrival times and the information of light detection frequencies corresponding to the return light arrival times can be obtained in an amount corresponding to the number of D from the above-described histogram. Accordingly, the generating section 221 according to the present embodiment outputs, to the learning section 261 and the recognizing section 271, multiple return light arrival times and the pieces of information of light detection frequencies corresponding to the return light arrival times in the number of V × H × D. The generating section 221 may output the generated histogram in the data format of a third-order tensor of (H, V, D), for example.

Referring to FIG. 14, the description returns to the example of the functional configuration of the information processing device 21. The learning section 261 learns a relation between the above-described histogram and the shape of the subject by using a neural network that uses, as input data, the histogram generated by the generating section 221 and correct answer data regarding the shape of the subject associated with the histogram. At this time, the learning section 261 may use, as the input data, the histogram output in the data format of a third-order tensor as described above. The learning section 261 stores a model obtained as a result of the learning in the learned model storage section 291.

The recognizing section 271 has a function of recognizing the shape of the subject by using the model obtained as a result of the learning of the learning section 261. As with the learning section 261, the recognizing section 271 performs the processing of the recognition using the histogram generated by the generating section 221 as input data.

With the configuration as described above, the recognizing section 271 of the information processing device 21 can perform the processing of the recognition using more return light arrival times and more information of light detection frequencies as input data as compared with the first embodiment. Hence, a further improvement in the accuracy of recognizing the shape of the subject by the recognizing section 271 can be expected.

### (Control Storage Section 281 and Learned Model Storage Section 291)

The control storage section 281 is a storage device capable of storing a program and data for operating the control section 201. In addition, the control storage section 281 can also temporarily store various kinds of data necessitated in a process of the operation of the control section 201. The storage device may be, for example, a nonvolatile storage device. In addition, the learned model storage section 291 is a storage device that stores the histogram used for the learning of the learning section 261 and the correct answer data indicating the shape of the subject associated with the histogram. In addition, the learned model storage section 291 stores the model obtained as a result of the learning of the learning section 261.

An example of a functional configuration of the information processing device 21 has been described above with reference to FIG. 14. Next, referring to FIG. 16, description will be made of an example of operation of an information processing system according to the second embodiment of the present disclosure.

### <3-2. Example of Operation>

FIG. 16 is a flowchart diagram of assistance in explaining an example of operation of the information processing system according to the second embodiment of the present disclosure. The flowchart illustrated in FIG. 16 illustrates an example of operation of the information processing system according to the second embodiment of the present disclosure in an inference stage. Incidentally, suppose that as preprocessing of the present operation example, the learning of the relation between the histogram and the shape of the subject associated with the histogram by the learning section 261 of the information processing device 21 has been performed in advance, and the model obtained as a result of the learning is stored in the learned model storage section 291.

First, the obtaining section 211 of the information processing device 21 obtains a return light arrival time and a light detection frequency from the sensor device 10 (S300). Next, the generating section 221 generates a histogram on the basis of the return light arrival time and the light detection frequency described above (S353).

The recognizing section 271 uses the generated histogram described above as input, and performs the processing of recognizing the shape of the subject (S356). The recognizing section 271 outputs a result of the recognition processing (S359).

### <3-3. Modifications>

### (Modifications)

An example of operation of the information processing system according to the second embodiment of the present disclosure has been described above with reference to FIG. 16. Incidentally, in the second embodiment described above, the histogram generated by the generating section 221 is used as input data for the learning section 261 and the recognizing section 271. That is, the input data for the learning section 261 and the recognizing section 271 includes multiple return light arrival times and the information of light detection frequencies corresponding to the return light arrival times in the number of H × V × D. In this regard, the data amount of the above-described input data is increased as compared with the data amount of the input data for the learning section 260 and the recognizing section 270 in the first embodiment. Accordingly, the generating section 221 of the information processing device 21 may adjust the above-described data amount by performing data manipulation that thins out an amount of information included in the generated histogram by a method as described with reference to FIG. 13 in the third modification of the first embodiment.

More specifically, first, the generating section 221 generates a histogram on the basis of return light arrival times and light detection frequencies obtained by the obtaining section 211. Further, the generating section 221 divides the return light arrival times by predetermined unit times in the generated histogram. Next, for each division, the generating section 221 selects a time within each division as one return light arrival time of the multiple return light arrival times. The generating section 221 extracts the return light arrival time selected in each division and the information of the light detection frequency corresponding to the selected return light arrival time, and regenerates a histogram based on the extracted information. The generating section 221 outputs the regenerated histogram to the learning section 261 and the recognizing section 271. This configuration enables the data amount of the input data for the learning section 261 and the recognizing section 271 to be adjusted according to the processing capability of the information processing device 21.

FIG. 17 is a flowchart diagram of assistance in explaining an example of operation of the information processing system according to a modification of the second embodiment of the present disclosure. In FIG. 17, S300, S353, S356, and S359 are as described above with reference to FIG. 16, and therefore, detailed description thereof will be omitted here.

After the processing of S300 and S353 is performed, the generating section 221 of the information processing device 21 performs processing of manipulating the data of the generated histogram (S360). Next, the processing of S356 and S359 is performed.

The second embodiment of the present disclosure has been described above with reference to FIGS. 14 to 17. According to the second embodiment of the present disclosure described above, it is possible to detect a subject including a transparent body more accurately.

### <<4. Suitable Examples of Application of Present Disclosure>>

Next, description will be made of an example of suitable targets of application of the information processing system according to the present disclosure. It is to be noted that the application targets to be described in the following are illustrative and that targets of application of the information processing system according to the present disclosure are not limited to the following examples.

### <4-1. Robot Picking>

An example of robot picking used in a manufacturing factory or the like is cited as an example of a suitable target of application of the present disclosure. FIG. 18 is an explanatory diagram illustrating an example of a suitable target of application of the information processing system according to the present disclosure. FIG. 18 includes a robot arm 401, a sensor device 402, a desk 403, and a subject O3. As illustrated in FIG. 18, the robot arm 401 and the sensor device 402 may be formed integrally with each other. Incidentally, the robot picking refers to a system in which a mechanical device such as the robot arm 401 autonomously controls operation of the mechanical device itself, and thereby grips an object such as the subject O3 and moves or transports the object. In the example illustrated in FIG. 18, the sensor device 402 corresponds to the sensor device 10 in the embodiments described above.

In the present application example, the information processing device 20 or the information processing device 21 uses, as input data, data that is either a histogram, a depth map, or point group data and correct answer data regarding the shape of the subject and a picking point associated with the data, and learns a relation between the data and the shape of the subject and the picking point. The picking point refers to positional information regarding an optimum part in the object as the subject at a time that the robot arm 401 grips the object.

The information processing device 20 or the information processing device 21 uses a model obtained as a result of the learning to output data indicating the position of the picking point of the subject O3 to the robot arm 401. Alternatively, the information processing device 20 or the information processing device 21 may output point group data obtained by cutting out only a point group corresponding to the subject O3. Alternatively, the information processing device 20 or the information processing device 21 may output point group data associated with semantic data, in which point group data the label of the foreground or the background is attached to each point.

According to such an application example, the robot arm 401 can recognize the presence or absence, position, and picking point of the subject O3 by using one of the above-described pieces of data output from the information processing device 20 or the information processing device 21 as input data and perform control to grip the subject O3.

### <4-2. Process Inspection>

In addition, a process inspection in a product manufacturing process is cited as another example of a suitable target of application of the present disclosure. FIG. 19 is an explanatory diagram illustrating another example of a suitable target of application of the information processing system according to the present disclosure. FIG. 19 includes a sensor device 411, a ceiling 412, a conveyor 413, and a subject O4. In the example illustrated in FIG. 19, the sensor device 411 corresponds to the sensor device 10 in the foregoing embodiments.

In the present application example, the information processing device 20 or the information processing device 21 uses, as input data, data that is either a histogram, a depth map, or point group data and correct answer data regarding the shape of the subject, a subject as a non-defective product, a subject as a defective product, and a defective part of the subject as a defective product associated with the data, and learns a relation of the data to the shape of the subject and the defective part.

The information processing device 20 or the information processing device 21 uses a model obtained as a result of the learning to output a determination result indicating whether the subject O4 is a non-defective product or a defective product. Alternatively, the information processing device 20 or the information processing device 21 may output a probability that the subject O4 is a non-defective product or a defective product. Further, in a case where the depth map or the point group data is input data, the information processing device 20 may output a two-dimensional image or point group data obtained by cutting out a defective part such as a scratch on the subject. Alternatively, the information processing device 20 or the information processing device 21 may output point group data in which each point is associated with semantic data such as a label indicating whether or not the point corresponds to a scratch on the subject or a defective part. The use of such an output result can automate a determination of a defective product in a process inspection of products including transparent bodies such as glass bottles.

### <4-3. Control of Autonomous Mobile Body>

Further, as another example of a suitable target of application of the present disclosure, an example is cited in which a result of the recognition processing of the information processing system according to the present disclosure is used for the processing of environment map generation and self-position estimation of an autonomous mobile body.

FIG. 20 is an explanatory diagram illustrating another example of a suitable target of application of the information processing system according to the present disclosure. FIG. 20 includes an autonomous mobile body 421, a subject O6, and a subject O7. In addition, FIG. 20 is a diagram of the autonomous mobile body 421, the subject O6, and the subject O7 as viewed downward from directly above in a vertical direction. The autonomous mobile body 421 is an autonomous mobile body such as an AGV or an AMR. The autonomous mobile body 421 may include a sensor device corresponding to the sensor device 10 in the foregoing embodiments and an information processing device corresponding to either the information processing device 20 or the information processing device 21. The autonomous mobile body 421 performs the generation of an environment map and self-position estimation (SLAM; Simultaneous Localization and Mapping) by irradiating a surrounding environment with light, and detecting light obtained as a result of the emitted light being reflected at a structure in the surrounding environment such as the subject O6 or the subject O7.

In the present application example, the autonomous mobile body 421 uses, as input data, data that is either a histogram, a depth map, or point group data and correct answer data regarding a structure within a building associated with the data, and learns a relation between the data and the structure. At this time, the above-described structure can include a structure having a transparent part such as an automatic door or a windowpane.

The autonomous mobile body 421 can use a model obtained as a result of the learning to output point group data including the coordinates of the position of a structure having a transparent part such as an automatic door. Alternatively, the autonomous mobile body 421 may output point group data in which each point is associated with semantic data indicating a physical property such as whether or not the point is transparent. The autonomous mobile body 421 can perform the generation of an environment map and self-position estimation on the basis of the output point group data described above.

An example of suitable targets of application of the present disclosure have been described above with reference to FIGS. 18 to 20.

### <<5. Example of Hardware Configuration>>

Embodiments of the present disclosure have been described above. The above-described information processing such as the identification of multiple return light arrival times, the output of multiple pieces of distance information, the processing of setting a parameter, and the processing of learning and recognition based on the output parameter and the output distance information is implemented by cooperation between software and hardware. In the following, description will be made of an example of a hardware configuration that can be applied to the information processing device 20 and the information processing device 21.

FIG. 21 is a block diagram illustrating an example of a hardware configuration 90. It is to be noted that the hardware configuration example of the hardware configuration 90 to be described in the following is merely an example of a hardware configuration of the information processing device 20 and the information processing device 21. Hence, each of the information processing device 20 and the information processing device 21 does not necessarily need to include all of the hardware configuration illustrated in FIG. 21. In addition, a part of the hardware configuration illustrated in FIG. 21 may not be present in the information processing device 20 and the information processing device 21.

As illustrated in FIG. 21, the hardware configuration 90 includes a CPU 901, a ROM (Read Only Memory) 903, and a RAM 905. In addition, the hardware configuration 90 may include a host bus 907, a bridge 909, an external bus 911, an interface 913, an input device 915, an output device 917, a storage device 919, a drive 921, a connection port 923, and a communicating device 925. The hardware configuration 90 may include a processing circuit referred to as a GPU (Graphics Processing Unit), a DSP (Digital Signal Processor), or an ASIC (Application Specific Integrated Circuit) in place of the CPU 901 or together with the CPU 901.

The CPU 901 functions as an arithmetic processing device and a control device. The CPU 901 controls operation as a whole or a part thereof within the hardware configuration 90 according to various programs recorded in the ROM 903, the RAM 905, the storage device 919, or a removable recording medium 927. The ROM 903 stores the programs, computation parameters, and the like used by the CPU 901. The RAM 905 temporarily stores a program used in the execution of the CPU 901, a parameter changing as appropriate in the execution, and the like. The CPU 901, the ROM 903, and the RAM 905 are interconnected by the host bus 907 constituted by an internal bus such as a CPU bus. Further, the host bus 907 is connected to the external bus 911 such as a PCI (Peripheral Component Interconnect/Interface) bus via the bridge 909.

The input device 915 is, for example, a device operated by a user, such as buttons. The input device 915 may include a mouse, a keyboard, a touch panel, a switch, a lever, and the like. In addition, the input device 915 may include a microphone that detects the voice of the user. The input device 915 may, for example, be a remote control device using an infrared ray or another radio wave, or may be an external connection apparatus 929 such as a mobile telephone that supports operation of the hardware configuration 90. The input device 915 includes an input control circuit that generates an input signal on the basis of information input by the user, and outputs the input signal to the CPU 901. The user inputs various kinds of data to the hardware configuration 90 or instructs the hardware configuration 90 to perform processing operation by operating the input device 915.

In addition, the input device 915 may include an imaging device and a sensor. The imaging device is a device that images a real space by using various members including an imaging element such as, for example, a CCD (Charge Coupled Device) imaging element or a CMOS (Complementary Metal Oxide Semiconductor) imaging element and a lens for controlling the image formation of a subject image onto the imaging element, and thereby generates a captured image. The imaging device may capture a still image, and may capture a moving image.

The sensor is, for example, various sensors such as a distance measuring sensor, an acceleration sensor, a gyro sensor, a geomagnetic sensor, a vibration sensor, an optical sensor, and a sound sensor. The sensor obtains information related to a state of the hardware configuration 90 itself, such as, for example, the attitude of a casing of the hardware configuration 90, and information related to a surrounding environment of the hardware configuration 90, such as brightness and noise on the periphery of the hardware configuration 90. In addition, the sensor may include a GPS (Global Positioning System) sensor that receives a GPS signal, and measures the latitude, longitude, and altitude of the device.

The output device 917 is constituted by a device capable of visually or auditorily notifying obtained information to the user. The output device 917 can be, for example, a display device such as an LCD (Liquid Crystal Display) or an organic EL (Electro-Luminescence) display, a sound output device such as a speaker, headphones, and the like. In addition, the output device 917 may include a PDP (Plasma Display Panel), a projector, a hologram, a printer device, and the like. The output device 917 outputs a result obtained by processing of the hardware configuration 90 as video of text, an image, or the like, or outputs the result as sound such as voice or audio. In addition, the output device 917 may include an illuminating device that brightens the surroundings and the like.

The storage device 919 is a device for data storage, which device is configured as an example of a storage unit of the hardware configuration 90. The storage device 919 is, for example, constituted by a magnetic storage device such as an HDD (Hard Disk Drive), a semiconductor storage device, an optical storage device, a magneto-optical storage device, or the like. The storage device 919 stores a program to be executed by the CPU 901 and various kinds of data, externally obtained various kinds of data, and the like.

The drive 921 is a reader/writer for the removable recording medium 927 such as a magnetic disk, an optical disk, a magneto-optical disk, or a semiconductor memory. The drive 921 is included in or external to the hardware configuration 90. The drive 921 reads information recorded on the removable recording medium 927 loaded therein, and outputs the information to the RAM 905. In addition, the drive 921 writes a record to the removable recording medium 927 loaded therein.

The connection port 923 is a port for directly connecting an apparatus to the hardware configuration 90. The connection port 923 can be, for example, a USB (Universal Serial Bus) port, an IEEE1394 port, an SCSI (Small Computer System Interface) port, or the like. In addition, the connection port 923 may be an RS-232C port, an optical audio terminal, an HDMI (registered trademark) (High-Definition Multimedia Interface) port, or the like. When the external connection apparatus 929 is connected to the connection port 923, various kinds of data can be exchanged between the hardware configuration 90 and the external connection apparatus 929.

The communicating device 925 is, for example, a communication interface constituted by a communicating device or the like for connecting to a local network or a communication network for communication with a base station of wireless communication. The communicating device 925 can be, for example, a communication card or the like for a wire or wireless LAN (Local Area Network), Bluetooth (registered trademark), Wi-Fi (registered trademark), or WUSB (Wireless USB). In addition, the communicating device 925 may be a router for optical communication, a router for ADSL (Asymmetric Digital Subscriber Line), modems for various kinds of communication, or the like. The communicating device 925, for example, transmits and receives signals or the like to and from the Internet or another communicating device by using a predetermined protocol such as TCP/IP. In addition, the local network or the communication network for communication with a base station which network is connected to the communicating device 925 is a network connected wiredly or wirelessly, and is, for example, the Internet, a home LAN, infrared communication, radio wave communication, satellite communication, or the like.

### <<6. Conclusion>>

Preferred embodiments of the present invention have been described above in detail with reference to the accompanying drawings. However, the present invention is not limited to such examples. It is obvious that a person having an ordinary knowledge in the technical field of the present invention could conceive of various changes or modifications within the scope of technical concepts described in claims. It is therefore to be understood that these changes or modifications also naturally fall within the technical scope of the present invention.

For example, in the foregoing embodiment, examples of robot picking, process inspection, and the control of an autonomous mobile body have been cited as examples of suitable targets of application of the present disclosure. However, targets of application of the present disclosure are not limited to these examples. For example, the information processing system according to the present disclosure is applicable to various situations in which the shape of a transparent body is recognized as follows. For example, as an example of a target of application of the present disclosure, a case is cited in which a sensor recognizes the shape of a transparent PET bottle or a glass bottle. Alternatively, as another example of a target of application of the present disclosure, the information processing system according to the present disclosure can be used to recognize the shape of a transparent container such as a container or a clothes case including plastic. Alternatively, an application is possible also in a case where the shape of a transparent body such as a glass substrate or a wafer is desired to be recognized during process inspection of the glass substrate or the wafer or the like in a process of manufacturing a liquid crystal display of a television set, a smart phone, or the like. Alternatively, application to recognition of the shape of an automobile windshield in a process of manufacturing an automobile is also possible. Further, application to recognition of the width or an end surface of a transparent film is also possible.

In addition, steps in the processing of operation of the sensor device 10, the information processing device 20, and the information processing device 21 according to the present embodiments do not necessarily need to be processed in time series according to the order described in the explanatory diagrams. For example, each step in the processing of operation of the sensor device 10, the information processing device 20, and the information processing device 21 may be processed in order different from the order described in the explanatory diagram, or may be processed in parallel.

In addition, it is possible to create one or more computer programs for making hardware such as the CPU, the ROM, and the RAM included in the information processing device 20 and the information processing device 21 described above exert functions of the information processing systems according to the present embodiments. In addition, a computer readable storage medium that stores the one or more computer programs is also provided.

In addition, effects described in the present specification are merely descriptive or illustrative, and are not restrictive. That is, the technology according to the present disclosure can produce other effects apparent to those skilled in the art from the description of the present specification together with the above-described effects or in place of the above-described effects.

### [Reference Signs List]

- 10:: Sensor device
- 110:: Light source driver
- 120:: Light emitting unit
- 130:: Light emitting optical system
- 140:: Scanning driver
- 150:: Light receiving optical system
- 160:: Light receiving unit
- 20:: Information processing device
- 200:: Control section
- 210:: Obtaining section
- 220:: Generating section
- 230:: Distance output section
- 240:: Map generating section
- 250:: Point group generating section
- 260:: Learning section
- 270:: Recognizing section
- 280:: Control storage section
- 290:: Learned model storage section
- 21:: Information processing device
- 201:: Control section
- 211:: Obtaining section
- 221:: Generating section
- 261:: Learning section
- 271:: Recognizing section
- 281:: Control storage section
- 291:: Learned model storage section
- 90:: Hardware configuration
- O:: Subject

## Claims

1. A program for causing a computer to function as:
an obtaining section (210) configured to obtain, as a return light arrival time, a time difference between a time point at which light is emitted from a light emitting unit (120) and a time point at which the emitted light is detected by a light receiving unit (160) after being reflected at a subject including a transparent body;
a generating section (220) configured to generate a histogram for each pixel indicating a relation between a light detection frequency in the light receiving unit (160) and the return light arrival time on a basis of the return light arrival time; and
a distance output section (230) configured to identify multiple return light arrival times from the histogram and output multiple pieces of distance information corresponding to the identified multiple return light arrival times; **characterized by**
a recognizing section (271) configured to recognize a shape of the subject (O1) by using a neural network configured to use, as input, the histogram in a data format of a third-order tensor having dimensions corresponding to the number of pixels in the horizontal direction, the number of pixels in the vertical direction, and the number of histogram bins.

2. The program according to claim 1, wherein,
for each of the identified multiple return light arrival times, the distance output section (230) is configured to output parameter information set according to the light detection frequency at the return light arrival time in association with the distance information.

3. The program according to claim 1 or 2, wherein
the distance output section (230) is configured to
detect all of light detection frequency peaks within a range of a time threshold value representing a threshold value of the return light arrival time from the histogram, and
identify the multiple return light arrival times corresponding to peaks exceeding a frequency threshold value representing a threshold value of the light detection frequency among the detected peaks.

4. The program according to claims 1 to 3, wherein
the distance output section (230) is configured to divide the return light arrival times by predetermined unit times in the histogram, and, for each division, identify a time within the division as one return light arrival time of the multiple return light arrival times.

5. The program according to claims 2 to 4, wherein
the distance output section (230) is configured to set light detection frequencies corresponding to the identified multiple return light arrival times in the histogram as the parameter of the multiple pieces of distance information corresponding to the multiple return light arrival times.

6. The program according to claims 2 to 4, wherein
the distance output section (230) is configured to
detect a time range in which the light detection frequency is equal to or more than a predetermined threshold value in continuous preceding and succeeding time ranges with each of the identified multiple return light arrival times as a reference point in the histogram, and
set an integrated value of a light detection frequency part exceeding the predetermined threshold value in the detected time range as the parameter of the multiple pieces of distance information respectively corresponding to the identified multiple return light arrival times.

7. The program according to claim 4, wherein
the distance output section (230) is configured to set, as the parameter of the multiple pieces of distance information associated with the identified multiple return light arrival times, an integrated value of the light detection frequencies in a range of each division when the return light arrival times are divided by the predetermined unit times in the histogram.

8. The program according to any one of the preceding claims, wherein
the computer is made to further function as a map generating section (240) configured to
generate a depth map as image data indicating a distance to the subject (O1) for each one pixel or each predetermined pixel group on a basis of the multiple pieces of distance information output by the distance output section (230), and,
in a case where there are multiple pieces of distance information corresponding to each one pixel or each predetermined pixel group, generate multiple depth maps according to the number of the pieces of distance information that are present.

9. The program according to claim 8, wherein the computer is made to further function as a point group generating section (250) configured to
convert a position of the subject (O1) indicated by each of the multiple pieces of distance information corresponding to the one pixel or the predetermined pixel group into coordinates in a three-dimensional space on a basis of the depth map, and
generate point group data in which each of the coordinates is associated with the parameter corresponding to the coordinate.

10. The program according to claim 9, wherein
the computer is made to further function as a learning section (260) configured to learn a relation between the depth map or the point group data and a shape of the subject (O1) by using a neural network that uses, as input data, either the depth map and correct answer data representing the shape of the subject (O1) associated with the depth map or the point group data and correct answer data representing the shape of the subject (O1) associated with the point group data.

11. The program according to claim 10, wherein
the computer is made to further function as a recognizing section (270) configured to recognize the shape of the subject (O1) by using a model obtained as a result of the learning of the learning section (260).

12. An information processing device (20) comprising:
an obtaining section (210) configured to obtain, as a return light arrival time, a time difference between a time point at which light is emitted from a light emitting unit (120) and a time point at which the emitted light is detected by a light receiving unit (160) after being reflected at a subject including a transparent body;
a generating section (220) configured to generate a histogram for each pixel indicating a relation between a light detection frequency in the light receiving unit (160) and the return light arrival time on a basis of the return light arrival time; and
a distance output section (230) configured to identify multiple return light arrival times from the histogram and output multiple pieces of distance information corresponding to the identified multiple return light arrival times; **characterized by**
a recognizing section (271) configured to recognize a shape of the subject (O1) by using a neural network configured to use, as input, the histogram in a data format of a third-order tensor having dimensions corresponding to the number of pixels in the horizontal direction, the number of pixels in the vertical direction, and the number of histogram bins.

## Patentansprüche

1. Programm zum Verursachen, dass ein Computer arbeitet als:
ein Erhalteabschnitt (210), der konfiguriert ist, um als eine Rücklichtankunftszeit eine Zeitdifferenz zwischen einem Zeitpunkt, zu dem Licht von einer Lichtemissionseinheit (120) emittiert wird, und einem Zeitpunkt zu erhalten, zu dem das emittierte Licht durch eine Lichtempfangseinheit (160) erfasst wird, nachdem es an einem Subjekt reflektiert wurde, das einen transparenten Körper einschließt;
ein Erzeugungsabschnitt (220), der konfiguriert ist, um ein Histogramm für jedes Pixel zu erzeugen, das eine Beziehung zwischen einer Lichterfassungsfrequenz in der Lichtempfangseinheit (160) und der Rücklichtankunftszeit auf einer Basis der Rücklichtankunftszeit angibt; und
ein Entfernungsausgabeabschnitt (230), der konfiguriert ist, um mehrere Rücklichtankunftszeiten aus dem Histogramm zu identifizieren und mehrere Elemente von Entfernungsinformationen auszugeben, die den identifizierten mehreren Rücklichtankunftszeiten entsprechen; **gekennzeichnet durch**
einen Erkennungsabschnitt (271), der konfiguriert ist, um eine Form des Subjekts (O1) durch Verwenden eines neuronalen Netzwerks zu erkennen, das konfiguriert ist, um als Eingabe das Histogramm in einem Datenformat eines Tensors dritter Ordnung zu verwenden, das Dimensionen aufweist, die der Anzahl von Pixeln in der horizontalen Richtung, der Anzahl von Pixeln in der vertikalen Richtung und der Anzahl von Histogramm-Bins entsprechen.

2. Programm nach Anspruch 1, wobei,
für jede der identifizierten mehreren Rücklichtankunftszeiten der Entfernungsausgabeabschnitt (230) konfiguriert ist, um Parameterinformationen, die gemäß der Lichterfassungsfrequenz zu der Rücklichtankunftszeit eingestellt sind, in Verbindung mit den Entfernungsinformationen auszugeben.

3. Programm nach Anspruch 1 oder 2, wobei
der Entfernungsausgabeabschnitt (230) konfiguriert ist zum
Erfassen aller Lichterfassungsfrequenzspitzen innerhalb eines Bereichs eines Zeitschwellenwerts, der einen Schwellenwert der Rücklichtankunftszeit darstellt, aus dem Histogramm, und
Identifizieren der mehreren Rücklichtankunftszeiten, die Spitzen unter den erfassten Spitzen entsprechen, die einen Frequenzschwellenwert überschreiten, der einen Lichterfassungsfrequenzschwellenwert darstellt.

4. Programm nach Anspruch 1 bis 3, wobei
der Entfernungsausgabeabschnitt (230) konfiguriert ist, um die Rücklichtankunftszeiten durch vorbestimmte Einheitszeiten in dem Histogramm zu unterteilen und für jede Unterteilung eine Zeit innerhalb der Unterteilung als eine Rücklichtankunftszeit der mehreren Rücklichtankunftszeiten zu identifizieren.

5. Programm nach Anspruch 2 bis 4, wobei
der Entfernungsausgabeabschnitt (230) konfiguriert ist, um Lichterfassungsfrequenzen, die den identifizierten mehreren Rücklichtankunftszeiten in dem Histogramm entsprechen, als den Parameter der mehreren Elemente von Entfernungsinformationen einzustellen, die den mehreren Rücklichtankunftszeiten entsprechen.

6. Programm nach Anspruch 2 bis 4, wobei
der Entfernungsausgabeabschnitt (230) konfiguriert ist zum
Erfassen eines Zeitbereichs, in dem die Lichterfassungsfrequenz in kontinuierlichen vorhergehenden und nachfolgenden Zeitbereichen mit jeder der identifizierten mehreren Rücklichtankunftszeiten als ein Referenzpunkt in dem Histogramm gleich oder größer als ein vorbestimmter Schwellenwert ist, und
Einstellen eines integrierten Werts eines Lichterfassungsfrequenzteils, der den vorbestimmten Schwellenwert in dem erfassten Zeitbereich überschreitet, als den Parameter der mehreren Elemente von Entfernungsinformationen, die jeweils den identifizierten mehreren Rücklichtankunftszeiten entsprechen.

7. Programm nach Anspruch 4, wobei
der Entfernungsausgabeabschnitt (230) konfiguriert ist, um als den Parameter der mehreren Elemente von Entfernungsinformationen, die mit den identifizierten mehreren Rücklichtankunftszeiten verbunden sind, einen integrierten Wert der Lichterfassungsfrequenzen in einem Bereich jeder Unterteilung einzustellen, wenn die Rücklichtankunftszeiten durch die vorbestimmten Einheitszeiten in dem Histogramm unterteilt werden.

8. Programm nach einem der vorstehenden Ansprüche, wobei
bewirkt wird, dass der Computer ferner als ein Kartenerzeugungsabschnitt (240) arbeitet, der konfiguriert ist zum
Erzeugen einer Tiefenkarte als Bilddaten, die eine Entfernung zu dem Subjekt (O1) für jedes einzelne Pixel oder jede vorbestimmte Pixelgruppe angeben, auf einer Basis der mehreren Elemente der Entfernungsinformationen, die durch den Entfernungsausgabeabschnitt (230) ausgegeben werden, und,
in einem Fall, in dem mehrere Entfernungsinformationen vorhanden sind, die jeweils einem Pixel oder jeder vorbestimmten Pixelgruppe entsprechen, Erzeugen mehrerer Tiefenkarten gemäß der Anzahl der Elemente von Entfernungsinformationen, die vorhanden sind.

9. Programm nach Anspruch 8, wobei
bewirkt wird, dass der Computer ferner als ein Punktgruppenerzeugungsabschnitt (250) arbeitet, der konfiguriert ist zum
Umwandeln einer Position des Subjekts (O1), die durch jede der mehreren Entfernungsinformationen angegeben wird, die dem einen Pixel oder der vorbestimmten Pixelgruppe entsprechen, in Koordinaten in einem dreidimensionalen Raum auf einer Basis der Tiefenkarte, und
Erzeugen von Punktgruppendaten, in denen jede der Koordinaten mit dem der Koordinate entsprechenden Parameter verbunden ist.

10. Programm nach Anspruch 9, wobei
bewirkt wird, dass der Computer ferner als ein Lernabschnitt (260) arbeitet, der konfiguriert ist, um eine Beziehung zwischen der Tiefenkarte oder den Punktgruppendaten und einer Form des Subjekts (O1) durch Verwenden eines neuronalen Netzwerks zu lernen, das als Eingabedaten entweder die Tiefenkarte und korrekte Antwortdaten, die die Form des Subjekts (O1) darstellen und mit der Tiefenkarte verbunden sind, oder die Punktgruppendaten und korrekte Antwortdaten verwendet, die die Form des Subjekts (O1) darstellen und mit den Punktgruppendaten verbunden sind.

11. Programm nach Anspruch 10, wobei
bewirkt wird, dass der Computer ferner als ein Erkennungsabschnitt (270) arbeitet, der konfiguriert ist, um die Form des Subjekts (O1) durch Verwenden eines Modells zu erkennen, das als ein Ergebnis des Lernens des Lernabschnitts (260) erhalten wird.

12. Informationsverarbeitungsvorrichtung (20), umfassend:
einen Erhalteabschnitt (210), der konfiguriert ist, um als eine Rücklichtankunftszeit eine Zeitdifferenz zwischen einem Zeitpunkt, zu dem Licht von einer Lichtemissionseinheit (120) emittiert wird, und einem Zeitpunkt zu erhalten, zu dem das emittierte Licht durch eine Lichtempfangseinheit (160) erfasst wird, nachdem es an einem Subjekt reflektiert wurde, das einen transparenten Körper einschließt;
einen Erzeugungsabschnitt (220), der konfiguriert ist, um ein Histogramm für jedes Pixel zu erzeugen, das eine Beziehung zwischen einer Lichterfassungsfrequenz in der Lichtempfangseinheit (160) und der Rücklichtankunftszeit auf einer Basis der Rücklichtankunftszeit angibt; und
einen Entfernungsausgabeabschnitt (230), der konfiguriert ist, um mehrere Rücklichtankunftszeiten aus dem Histogramm zu identifizieren und mehrere Elemente von Entfernungsinformationen auszugeben, die den identifizierten mehreren Rücklichtankunftszeiten entsprechen; **gekennzeichnet durch**
einen Erkennungsabschnitt (271), der konfiguriert ist, um eine Form des Subjekts (O1) durch Verwenden eines neuronalen Netzwerks zu erkennen, das konfiguriert ist, um als Eingabe das Histogramm in einem Datenformat eines Tensors dritter Ordnung zu verwenden, das Dimensionen aufweist, die der Anzahl von Pixeln in der horizontalen Richtung, der Anzahl von Pixeln in der vertikalen Richtung und der Anzahl von Histogramm-Bins entsprechen.

## Revendications

1. Programme permettant d'amener un ordinateur à fonctionner comme :
une section d'obtention (210) configurée pour obtenir, comme temps d'arrivée de la lumière renvoyée, une différence de temps entre un instant auquel la lumière est émise par une unité d'émission de lumière (120) et un instant auquel la lumière émise est détectée par une unité de réception de lumière (160) après avoir été réfléchie par un sujet comportant un corps transparent ;
une section de génération (220) configurée pour générer un histogramme pour chaque pixel indiquant une relation entre une fréquence de détection de lumière dans l'unité de réception de lumière (160) et le temps d'arrivée de la lumière renvoyée sur la base du temps d'arrivée de la lumière renvoyée ; et
une section de sortie de distance (230) configurée pour identifier de multiples temps d'arrivée de la lumière renvoyée à partir de l'histogramme et délivrer en sortie de multiples éléments d'information de distance correspondant aux multiples temps d'arrivée identifiés de la lumière renvoyée ; **caractérisé par**
une section de reconnaissance (271) configurée pour reconnaître une forme du sujet (O1) à l'aide d'un réseau neuronal configuré pour utiliser, comme entrée, l'histogramme dans un format de données d'un tenseur de troisième ordre ayant des dimensions correspondant au nombre de pixels dans la direction horizontale, au nombre de pixels dans la direction verticale, et au nombre de barres d'histogramme.

2. Programme selon la revendication 1, dans lequel,
pour chacun des multiples temps d'arrivée de la lumière renvoyée identifiés, la section de sortie de distance (230) est configurée pour délivrer en sortie des informations de paramètre définies selon la fréquence de détection de lumière au temps d'arrivée de la lumière renvoyée en association avec les informations de distance.

3. Programme selon la revendication 1 ou 2, dans lequel la section de sortie de distance (230) est configurée pour
détecter tous les pics de fréquence de détection de lumière dans une plage d'une valeur de seuil de temps représentant une valeur de seuil du temps d'arrivée de la lumière renvoyée à partir de l'histogramme, et
identifier les multiples temps d'arrivée de la lumière renvoyée correspondant à des pics dépassant une valeur de seuil de fréquence représentant une valeur de seuil de la fréquence de détection de lumière parmi les pics détectés.

4. Programme selon les revendications 1 à 3, dans lequel
la section de sortie de distance (230) est configurée pour diviser les temps d'arrivée de la lumière renvoyée par des unités de temps prédéterminées dans l'histogramme, et, pour chaque division, identifier un temps dans la division comme un temps d'arrivée de la lumière renvoyée parmi les multiples temps d'arrivée de la lumière renvoyée.

5. Programme selon les revendications 2 à 4, dans lequel
la section de sortie de distance (230) est configurée pour définir des fréquences de détection de lumière correspondant aux multiples temps d'arrivée de la lumière renvoyée identifiés dans l'histogramme comme paramètre des multiples éléments d'information de distance correspondant aux multiples temps d'arrivée de la lumière renvoyée.

6. Programme selon les revendications 2 à 4, dans lequel
la section de sortie de distance (230) est configurée pour
détecter une plage de temps dans laquelle la fréquence de détection de lumière est égale ou supérieure à une valeur de seuil prédéterminée dans des plages de temps précédentes et suivantes continues avec chacun des multiples temps d'arrivée de la lumière renvoyée identifiés comme point de référence dans l'histogramme, et
définir une valeur intégrée d'une partie de fréquence de détection de lumière dépassant la valeur de seuil prédéterminée dans la plage de temps détectée comme paramètre des multiples éléments d'information de distance correspondant respectivement aux multiples temps d'arrivée de la lumière renvoyée identifiés.

7. Programme selon la revendication 4, dans lequel
la section de sortie de distance (230) est configurée pour définir, comme paramètre des multiples éléments d'information de distance associés aux multiples temps d'arrivée de la lumière renvoyée identifiés, une valeur intégrée des fréquences de détection de lumière dans une plage de chaque division lorsque les temps d'arrivée de la lumière renvoyée sont divisés par les unités de temps prédéterminées dans l'histogramme.

8. Programme selon l'une quelconque des revendications précédentes, dans lequel
l'ordinateur est en outre amené à fonctionner comme une section de génération de carte (240) configurée pour
générer une carte de profondeur comme données d'image indiquant une distance par rapport au sujet (O1) pour chaque pixel unique ou chaque groupe de pixels prédéterminé sur la base des multiples éléments d'information de distance délivrés en sortie par la section de sortie de distance (230), et,
dans le cas où il y a de multiples éléments d'information de distance correspondant à chaque pixel unique ou chaque groupe de pixels prédéterminé, générer de multiples cartes de profondeur selon le nombre d'éléments d'information de distance qui sont présents.

9. Programme selon la revendication 8, dans lequel
l'ordinateur est en outre amené à fonctionner comme une section de génération de groupe de points (250) configurée pour
convertir une position du sujet (O1) indiquée par chacun des multiples éléments d'information de distance correspondant au pixel unique ou au groupe de pixels prédéterminé en coordonnées dans un espace tridimensionnel sur la base de la carte de profondeur, et
générer des données de groupe de points dans lesquelles chacune des coordonnées est associée au paramètre correspondant à la coordonnée.

10. Programme selon la revendication 9, dans lequel
l'ordinateur est en outre amené à fonctionner comme une section d'apprentissage (260) configurée pour apprendre une relation entre la carte de profondeur ou les données de groupe de points et une forme du sujet (O1) à l'aide d'un réseau neuronal qui utilise, comme données d'entrée, soit la carte de profondeur et des données de réponse correcte représentant la forme du sujet (O1) associées à la carte de profondeur, soit les données de groupe de points et des données de réponse correcte représentant la forme du sujet (O1) associées aux données de groupe de points.

11. Programme selon la revendication 10, dans lequel
l'ordinateur est en outre amené à fonctionner comme une section de reconnaissance (270) configurée pour reconnaître la forme du sujet (O1) à l'aide d'un modèle obtenu en conséquence de l'apprentissage de la section d'apprentissage (260).

12. Dispositif de traitement d'informations (20) comprenant :
une section d'obtention (210) configurée pour obtenir, comme temps d'arrivée de la lumière renvoyée, une différence de temps entre un instant auquel la lumière est émise par une unité d'émission de lumière (120) et un instant auquel la lumière émise est détectée par une unité de réception de lumière (160) après avoir été réfléchie par un sujet comportant un corps transparent ;
une section de génération (220) configurée pour générer un histogramme pour chaque pixel indiquant une relation entre une fréquence de détection de lumière dans l'unité de réception de lumière (160) et le temps d'arrivée de la lumière renvoyée sur la base du temps d'arrivée de la lumière renvoyée ; et
une section de sortie de distance (230) configurée pour identifier de multiples temps d'arrivée de la lumière renvoyée à partir de l'histogramme et délivrer en sortie de multiples éléments d'information de distance correspondant aux multiples temps d'arrivée identifiés de la lumière renvoyée ; **caractérisé par**
une section de reconnaissance (271) configurée pour reconnaître une forme du sujet (O1) à l'aide d'un réseau neuronal configuré pour utiliser, comme entrée, l'histogramme dans un format de données d'un tenseur de troisième ordre ayant des dimensions correspondant au nombre de pixels dans la direction horizontale, au nombre de pixels dans la direction verticale, et au nombre de barres d'histogramme.
